(19) Europäisches Patentamt

European Patent Office

Office européen des brevets

(11) EP 1 357 766 A1

(12) EUROPEAN PATENT APPLICATION

(43) Date of publication:
29.10.2003 Bulletin 2003/44

(51) Int Cl.⁷: **H04Q 7/36**, H04Q 7/30

(21) Application number: 03009047.6

(22) Date of filing: 17.04.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **22.04.2002 JP 2002119862**

(71) Applicant: **NTT DoCoMo, Inc.
Tokyo 100-6150 (JP)**

(72) Inventors:
• **Tobe, Hideki, Int. Prop. Dpt. NTT DoCoMo, Inc.
Chiyoda-ku, Tokyo 100-6150 (JP)**
• **Yamao, Yasushi,
Int. Prop. Dpt. NTT DoCoMo, Inc.
Chiyoda-ku, Tokyo 100-6150 (JP)**

(74) Representative: **Bockhorni, Josef et al
Patent-& Rechtsanwälte,
Grosse, Bockhorni, Schumacher,
Forstenrieder Allee 59
81476 München (DE)**

(54) **Method, apparatus and program for controlling cell area formation in a cellular system**

(57) The object is to implement autonomous and optimal cell formation on the occasion of adding a new resource to a cellular system. Abase station (BS4) detects a location of its own, extracts location information about locations of neighbor base stations (BS1-BS3) attached to broadcast signals from the neighbor base stations, captures the circumstances of the neighbor cell areas from these locations of its own and neighbor base stations, and sets a direction and a coverage (e.g., a cell radius and a spanning angle) of a new cell area on the basis of the circumstances of the neighbor cell areas. The base station may also be configured to capture the circumstances of the neighbor cell areas in consideration of propagation losses between the home station and the neighbor base stations, in addition to the above location information, or to capture the circumstances of the neighbor cell areas in consideration of the number of communicable base stations at a location of each mobile station (MS1...MS4) in the neighborhood.

**Fig.1**

EP 1 357 766 A1

**Description**

BACKGROUND OF THE INVENTION

Field of the Invention

The present invention relates to a cell area formation control method adapted to a cellular system consisting of a control apparatus for controlling formation of a cell area, and a plurality of mobile stations, and utilized when the control apparatus forms a cell area in the cellular system; the control apparatus; and a cell area formation control program to be executed by a computer mounted on the control apparatus.

Related Background Art

An area in which a base station can provide service to mobile stations is dependent upon reception quality of a control signal transmitted from the base station. The conventional base stations transmit the control signal, called a perch channel, by a predetermined power. A mobile station receives the perch channel from a base station and can communicate with the base station if the reception quality satisfies a specified level. When a base station constructs a cell area, the service area of the base station is defined as a coverage in which mobile stations can receive the perch channel over the specified reception quality. In order to avoid the problem of interference and others, the base stations use sector antennas and make their service area of small service areas (cells).

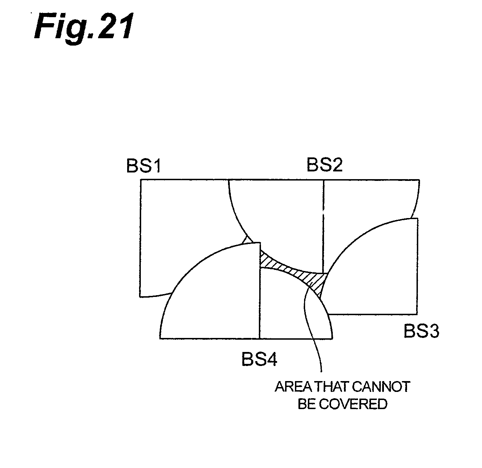

On the other hand, since the physical conditions about the antenna facilities and others are fixed, the number of sector antennas and directions and coverages of cell areas formed by the sector antennas are restricted. For this reason, there arises the problem that even if control is made to change cell radii, for example, by control of transmission powers or the like, there can appear an area that cannot be covered, as shown in Fig. 21, depending upon arrangement of base stations.

Therefore, to form cells appropriately is a very important technical subject, and there are some technical documents about construction of cells disclosed. For example, Technical Report of IEICE "CDMA dynamic cell construction taking multiple traffic into account" (July 1997, co-authored by Koji Takeo, Yasuharu Amezawa, and Shinichi Sato) discloses the technology of dynamically changing radii of respective cells between adjacent cells according to distribution circumstances of mobile stations so as to modify accommodation of mobile stations, in order to avoid congestion of mobile stations. Technical Report of IEICE "A study on dynamic zone construction in microcell CDMA mobile tlelcommunications" (June 1996, coauthored by Yasuharu Amezawa, Koichi Yamada, and Shinichi Sato) discloses the technology of dynamically changing center angles of cells according to distribution circumstances of mobile stations so as to modify accommodation of mobile stations, in order to avoid the congestion of mobile stations.

However, these technologies are associated with the reconstruction methods of cells under the condition that the number and arrangement of base stations are prescribed, and can be sort of said as techniques of effectively allocating finite existing resources according to distribution circumstances of mobile stations. Namely, there have been few studies heretofore about allocation of resources on the occasion of newly installing a base station (or adding a new resource).

The present invention has been accomplished in order to solve the above problem and an object of the invention is to provide a cell area formation control method, a control apparatus, and a cell area formation control program implementing autonomous and optimal cell formation on the occasion of adding a new resource to a cellular system.

SUMMARY OF THE INVENTION

In order to achieve the above object, a cell area formation control method according to the present invention is a cell area formation control method adapted to a cellular system comprising a control apparatus for controlling formation of a cell area and a plurality of mobile stations; and utilized when the control apparatus forms a cell area in the cellular system, the method comprising: setting a direction and a coverage of a newly formed cell area on the basis of circumstances of neighbor cell areas.

The coverage of the cell area set herein, for example, supposing it is a cell area of sector form, corresponds to a center angle and a radius of the cell area. However, the cell area according to the present invention is not limited to the cell area of sector form, but it can also embrace other cell areas, e.g., one with a directivity along a particular direction formed by a directional antenna in the control apparatus. The circumstances of the neighbor cell areas being the basis of setting embrace information about locations of other control apparatus forming the neighbor cell areas, configuration circumstances of the neighbor cell areas (directions and coverages of the cell areas (e.g., center angles and radii)), and so on.

Specifically the above cell area formation control method is preferably configured so that the control apparatus detects the circumstances of the neighbor cell areas containing information about locations of other control apparatus forming the neighbor cell areas, on the basis of broadcast signals from the other control apparatus provided with information about the circumstances; and sets the direction and coverage of the newly formed cell area on the basis of the result of the detection. Namely, the control apparatus detects the circumstances of the neighbor cell areas on the basis of the broadcast signals from the other control apparatus provided with the circumstances information about the circumstances of the neighbor cell areas. Then the control apparatus sets the direction and coverage of the new cell area on the basis of the result of the detection.

The control method is preferably configured so that the control apparatus detects circumstances of a cell area of a home apparatus (the control apparatus itself) containing information about a location of the home apparatus; exchanges the result of the detection, and the information about the circumstances of the neighbor cell areas containing the information about the locations of the other control apparatus forming the neighbor cell areas, with the other control apparatus; and sets the direction and coverage of the newly formed cell area on the basis of the information about the circumstances of the neighbor cell areas obtained from the other control apparatus by the exchange. Namely, the control apparatus can obtain the information about the circumstances of the neighbor cell areas by the exchange of the circumstances information with the other control apparatus forming the neighbor cell areas and can set the direction and coverage of the new cell area on the basis of the circumstances information of the neighbor cell areas obtained from the other control apparatus by the exchange.

The control method is preferably configured so that the control apparatus detects information about locations of other control apparatus forming the neighbor cell areas, on the basis of broadcast signals from the other control apparatus provided with the location information, and detects a location of a home apparatus; detects a mid-direction that bisects a zone between directions from the home apparatus toward respective other control apparatus adjacent to each other, and a distance between the home apparatus and each of the other control apparatus, on the basis of the location information of the home apparatus and the location information of the other control apparatus obtained by the detection; and sets the direction and coverage of the cell area on the basis of a zone between mid-directions adjacent to each other and a distance between the home apparatus and another control apparatus located in the zone, obtained by the detection. Namely, the control apparatus first detects the information about the locations of the other control apparatus forming the neighbor cell areas, on the basis of the broadcast signals from the other control apparatus provided with the location information, and also detects the location of the home apparatus. Then the control apparatus detects the mid-direction that bisects zone between directions from the home apparatus toward respective other control apparatus adjacent to each other, and the distance between the home apparatus and each of the other control apparatus, on the basis of the location information of the home apparatus and the location information of the other control apparatus obtained by the detection. Furthermore, the control apparatus can set the direction and coverage of the cell area on the basis of a zone between mid-directions adjacent to each other and the distance between the home apparatus and another control apparatus located in the zone, obtained by the detection.

The control method is preferably configured so that the control apparatus detects information about locations of other control apparatus forming the neighbor cell areas, on the basis of broadcast signals from the other control apparatus provided with the location information, and detects a location of a home apparatus; detects a center position direction from the home apparatus toward a center position of each of other control apparatus adjacent to each other, and a distance between the home apparatus and each of the other control apparatus, on the basis of the location information of the home apparatus and the location information of the other control apparatus obtained by the detection; and sets the direction and coverage of the cell area on the basis of a zone between center position directions adjacent to each other and distances between the home apparatus and other control apparatus located in the zone, obtained by the detection. Namely, the control apparatus first detects the location information of the other control apparatus forming the neighbor cell areas, on the basis of the broadcast signals from the other control apparatus provided with the location information, and also detects the location of the home apparatus. Then the control apparatus detects the center position direction from the home apparatus toward the center position of each of other control apparatus adjacent to each other, and the distance between the home apparatus and each of the other control apparatus, on the basis of the location information of the home apparatus and the location information of the other control apparatus obtained by the detection. Furthermore, the control apparatus can set the direction and coverage of the cell area on the basis of a zone between center position directions adjacent to each other and the distance between the home apparatus and another control apparatus located in the zone, obtained by the detection.

The control method is preferably configured so that the control apparatus detects information about locations of other control apparatus forming the neighbor cell areas, on the basis of broadcast signals from the other control apparatus provided with the location information, and detects a location of a home apparatus; receives the broadcast signals transmitted from the other control apparatus and each provided with information about a transmission power used in the transmission, to acquire the transmission power information; measures reception powers of the broadcast signals at the home apparatus; calculates propagation losses between the home apparatus and the other control apparatus on the basis of the reception powers and the transmission powers; detects arrangement of the cell areas formed by the other control apparatus, on the basis of the propagation losses obtained by the calculation, and the location information of the home apparatus and the location information of the other control apparatus obtained by the detection; and sets the direction and coverage of the newly formed cell area on the basis of the arrangement of the cell areas obtained by the detection.

Namely, the control apparatus first detects the location information of the other control apparatus forming the neighbor cell areas, on the basis of the broadcast signals from the other control apparatus provided with the location information, and also detects the location of the home apparatus. Then the control apparatus receives the broadcast signals transmitted from the other control apparatus and each provided with the information about the transmission power used in the transmission, to acquire the transmission power information, and measures the reception powers of the broadcast signals at the home apparatus. Then the control apparatus calculates the propagation losses between the home apparatus and the other control apparatus on the basis of the reception powers and transmission powers, and detects the arrangement of the cell areas formed by the other control apparatus, on the basis of the propagation losses obtained by the calculation, and the location information of the home apparatus and the location information of the other control apparatus obtained by the detection. Furthermore, the control apparatus can set the direction and coverage of the newly formed cell area on the basis of the arrangement of the cell areas obtained by the detection.

The control method is preferably configured so that the control apparatus detects information about locations of other control apparatus forming the neighbor cell areas, on the basis of broadcast signals from the other control apparatus provided with the location information, and detects a location of a home apparatus; detects a mid-direction that bisects a zone between directions from the home apparatus toward respective other control apparatus adjacent to each other, and a distance between the home apparatus and each of the other control apparatus, on the basis of the location information of the home apparatus and the location information of the other control apparatus obtained by the detection; receives the broadcast signals transmitted from the other control apparatus and each provided with information about a transmission power used in the transmission, to acquire the transmission power information; measures reception powers of the broadcast signals at the home apparatus; calculates propagation losses between the home apparatus and the other control apparatus on the basis of the reception powers and the transmission powers; detects arrangement of the cell areas formed by the other control apparatus, on the basis of the propagation losses obtained by the calculation, and the location information of the home apparatus and the location information of the other control apparatus obtained by the detection; and sets the direction and coverage of the cell area on the basis of a zone between mid-directions adjacent to each other, arrangement of cell areas formed by another control apparatus located in the zone, and a distance to the other control apparatus, which were obtained by the detection.

Namely, the control apparatus first detects the location information of the other control apparatus forming the neighbor cell areas, on the basis of the broadcast signals from the other control apparatus provided with the location information, and also detects the location of the home apparatus. Then the control apparatus detects the mid-direction that bisects the zone between directions from the home apparatus toward respective other control apparatus adjacent to each other, and the distance between the home apparatus and each of the other control apparatus, on the basis of the location information of the home apparatus and the location information of the other control apparatus obtained by the detection. Then the control apparatus receives the broadcast signals transmitted from the other control apparatus and each provided with the information about the transmission power used in the transmission, to acquire the transmission power information, measures the reception powers of the broadcast signals at the home apparatus, and calculates the propagation losses between the home apparatus and the other control apparatus on the basis of the reception powers and transmission powers. The propagation losses can be defined by adopting a variety of physical quantities determined from the above reception powers and transmission powers. Then the control apparatus detects the arrangement of the cell areas formed by the other control apparatus, on the basis of the propagation losses obtained by the calculation, and the location information of the home apparatus and the location information of the other control apparatus obtained by the detection. Furthermore, the control apparatus can set the direction and coverage of the cell area on the basis of a zone between mid-directions adjacent to each other, arrangement of cell areas formed by another control apparatus located in the zone, and a distance to the other control apparatus, which were obtained by the detection. When the direction and coverage of the cell area are set on the basis of the propagation losses between control apparatus in this way, it becomes feasible to finely set the cell coverage in particular.

In order to achieve the above object, another cell area formation control method according to the present invention is a cell area formation control method adapted to a cellular system comprising a control apparatus for controlling formation of a cell area and a plurality of mobile stations; and utilized when the control apparatus forms a cell area in the cellular system, wherein the control apparatus sets a direction and a coverage of a newly formed cell area on the basis of communication circumstances of the mobile stations in neighbor cell areas. Namely, the present invention permits the direction and coverage of the newly formed cell area to be set on the basis of the communication circumstances of the mobile stations in the neighbor cell areas, instead of the circumstances of the neighbor cell areas as adopted in the above method.

Specifically the above cell area formation control method is preferably configured so that the mobile stations each detect their own location, the mobile stations each notify control apparatus communicable therewith, of their own location information and communication circumstances, the control apparatus detects arrangement circumstances of the neighbor cell areas on the basis of the location information and communication circumstances from the mobile stations, and the control apparatus sets the direction and coverage of the newly formed cell area on the basis of the arrangement circumstances of the neighbor cell areas obtained by the detection. Namely, first, each mobile station detects the location of its own (the mobile station itself) and notifies the control apparatus communicable therewith, of the location information and communication circumstances of its own. The control apparatus, receiving this notification, is preferably configured to detect the arrangement circumstances of the neighbor cell areas on the basis of the location information and communication circumstances from the mobile stations and then set the direction and coverage of the newly formed cell area on the basis of the arrangement circumstances of the neighbor cell areas obtained by the detection. The communication circumstances in each mobile station include, for example, information about the number of control apparatus simultaneously communicable with the mobile station (i.e., information indicating overlap circumstances of neighbor cell areas) or the like. The control apparatus can detect the arrangement situations of the neighbor cell areas on the basis of the location information and communication circumstances of the mobile stations obtained from the mobile stations as described above, and properly set the direction and coverage of the new cell area on the basis of the arrangement circumstances of the neighbor cell areas.

Preferably, the mobile stations each detect their own location and the number of control apparatus simultaneously communicable therewith, the mobile stations each notify the control apparatus simultaneously communicable therewith, of their own location information and the number of control apparatus simultaneously communicable therewith, the control apparatus detects arrangement circumstances of the neighbor cell areas on the basis of the location information and information about the number of simultaneously communicable control apparatus from each mobile station, and the control apparatus sets the direction and coverage of the newly formed cell area on the basis of the arrangement circumstances of the neighbor cell areas obtained by the detection. Namely, each mobile station detects the location of its own and the number of control apparatus simultaneously communicable therewith, and notifies the control apparatus simultaneously communicable therewith, of the location information of its own and the number of simultaneously communicable control apparatus. The control apparatus, receiving this notification, can detect the arrangement circumstances of the neighbor cell areas on the basis of the location information and the information about the number of simultaneously communicable control apparatus (i.e., information indicating overlap circumstances of neighbor cell areas) from each mobile station, and set the direction and coverage of the newly formed cell area on the basis of the arrangement circumstances of the neighbor cell areas obtained by the detection.

Preferably, the mobile stations each detect their own location and the number of control apparatus simultaneously communicable therewith, the mobile stations each notify the control apparatus simultaneously communicable therewith, of their own location information and the number of control apparatus simultaneously communicable therewith, the control apparatus detects presence or absence of an overlap area between the cell area formed by the control apparatus and a neighbor cell area and a location of the overlap area on the basis of the location information of each mobile station and information about the number of simultaneously communicable control apparatus at the location of each mobile station, and the control apparatus sets the direction and coverage of the cell area on the basis of the presence or absence of the overlap area and the location information of the overlap area obtained by the detection. Namely, each mobile station detects the location of its own and the number of control apparatus simultaneously communicable therewith, and notifies the control apparatus simultaneously communicable therewith, of the location information of its own and the number of simultaneously communicable control apparatus. The control apparatus, receiving this notification, can determine that there is an overlap area with a neighbor cell area if there exists a mobile station whose number of simultaneously communicable control apparatus is two or more, on the basis of the location information of each mobile station, and the information about the number of simultaneously communicable control apparatus at the location of each mobile station; the control apparatus can determine the location of the overlap area from the location of the mobile station in question; and then the control apparatus can detect the presence or absence of an overlap area between the cell area formed by the control apparatus and a neighbor cell area and the location of the overlap area.

In order to achieve the above object, a control apparatus according to the present invention is a control apparatus for controlling formation of a cell area in a cellular system, the apparatus comprising: first cell area setting means for setting a direction and a coverage of a newly formed cell area on the basis of circumstances of neighbor cell areas. As the control apparatus comprises the first cell area setting means, it can set the direction and coverage of the new cell area on the basis of the circumstances of the neighbor cell areas.

The control apparatus according to the present invention is preferably configured to further comprise neighbor circumstances detecting means for detecting the circumstances of the neighbor cell areas containing information about locations of other control apparatus forming the neighbor cell areas, on the basis of broadcast signals from the other control apparatus provided with information about the circumstances, and then it becomes feasible to detect the circumstances of the neighbor cell areas containing the location information of the other control apparatus, on the basis of the broadcast signals from the other control apparatus.

The control apparatus according to the present invention is preferably configured to further comprise: home circumstances detecting means for detecting circumstances of the cell area of the home apparatus containing location information of the home apparatus; and information exchanging means for exchanging the result of the detection and information about the circumstances of the neighbor cell areas containing location information of other control apparatus forming the neighbor cell areas, with the other control apparatus, and then it becomes feasible to detect the circumstances of the neighbor cell areas containing the location information of the other control apparatus, by the exchange of information with the other control apparatus.

The information exchanging means is preferably configured to comprise at least one antenna capable of simultaneously transmitting information for formation of a cell area, into an arbitrary direction and an arbitrary range. For example, it is also possible to adopt directional antennas or the like such as adaptive array antennas.

The control apparatus according to the present invention is preferably configured to further comprise location detecting means for detecting information about locations of other control apparatus forming the neighbor cell areas, on the basis of broadcast signals from the other control apparatus provided with the location information, and detecting a location of the home apparatus; and direction setting means for obtaining a mid-direction that bisects a zone between directions from the home apparatus toward respective other control apparatus adjacent to each other, on the basis of the location information of the home apparatus and the location information of the other control apparatus obtained by the detection, and setting a direction and a center angle of a cell area on the basis of a zone between mid-directions adjacent to each other among mid-directions thus obtained. In this configuration, the direction setting means can obtain the mid-direction that bisects a zone between directions from the home apparatus toward respective other control apparatus adjacent to each other, on the basis of the location information of the home apparatus and the location information of the other control apparatus obtained by the detection by the location detecting means, and set the direction and center angle of the cell area on the basis of a zone between mid-directions adjacent to each other among mid-directions thus obtained.

The control apparatus according to the present invention is preferably configured to further comprise location detecting means for detecting information about locations of other control apparatus forming the neighbor cell areas, on the basis of broadcast signals from the other control apparatus provided with the location information, and detecting a location of the home apparatus; and direction setting means for obtaining a center position direction from the home apparatus toward a center position of each of other control apparatus adjacent to each other, on the basis of the location information of the home apparatus and the location information of the other control apparatus obtained by the detection, and setting a direction and a center angle of a cell area on the basis of a zone between center position directions adjacent to each other among center position directions thus obtained. In this configuration, the direction setting means can obtain the center position directions from the home apparatus toward the center positions of the other control apparatus adjacent to each other, on the basis of the location information of the home apparatus and the location information of the other control apparatus obtained by the detection by the location detecting means, and set the direction and center angle of the cell area on the basis of a zone between center position directions adjacent to each other among center position directions thus obtained.

The control apparatus according to the present invention is preferably configured to further comprise location detecting means for detecting information about locations of other control apparatus forming the neighbor cell areas, on the basis of broadcast signals from the other control apparatus provided with the location information, and detecting a location of the home apparatus; distance detecting means for detecting a distance between the home apparatus and each of the other control apparatus on the basis of the location information of the home apparatus and the location information of the other control apparatus obtained by the detection; and radius setting means for setting a radius of a cell area on the basis of the distance obtained by the detection and a predetermined constant about an overlap factor between cells. In this configuration, the distance detecting means detects the distance between the home apparatus and each of the other control apparatus, on the basis of the location information of the home apparatus and the location information of the other control apparatus obtained by the detection by the location detecting means, and the radius setting means can set the radius of the cell area on the basis of the distance obtained by the detection and the predetermined constant about the overlap factor between cells.

The control apparatus according to the present invention is preferably configured to further comprise location detecting means for detecting information about locations of other control apparatus forming the neighbor cell areas, on the basis of broadcast signals from the other control apparatus provided with the location information, and detecting a location of the home apparatus; power information acquiring means for receiving the broadcast signals transmitted from the other control apparatus and each provided with information about a transmission power used in the transmission, to acquire the transmission power information, and measuring reception powers of the broadcast signals at the home apparatus; propagation loss calculating means for calculating propagation losses between the home apparatus and the other control apparatus on the basis of the reception powers and the transmission powers; and cell area arrangement detecting means for detecting arrangement of the cell areas formed by the other control apparatus, on the basis of the propagation losses obtained by the calculation, and the location information of the home apparatus and the location information of the other control apparatus obtained by the detection. In this configuration, the power information acquiring means receives the broadcast signals provided with the information about transmission powers from the other control apparatus to acquire the transmission power information, and measures the reception powers of the broadcast signals at the home apparatus, and the propagation loss calculating means calculates the propagation losses between the home apparatus and the other control apparatus on the basis of the reception powers and transmission powers. Then the cell area arrangement detecting means can detect the arrangement of the cell areas formed by the other control apparatus, on the basis of the propagation losses obtained by the calculation, and the location information of the home apparatus and the location information of the other control apparatus obtained by the detection by the location detecting means.

In order to achieve the above object, another control apparatus according to the present invention is a control apparatus for controlling formation of a cell area in a cellular system, the apparatus comprising: second cell area setting means for setting a direction and a coverage of a newly formed cell area on the basis of communication circumstances of mobile stations in neighbor cell areas. As the control apparatus comprises the second cell area setting means, it can set the direction and coverage of the new cell area on the basis of the communication circumstances of the mobile stations in the neighbor cell areas.

The control apparatus according to the present invention is preferably configured to further comprise receiving means for receiving information about a location of each mobile station and communication circumstances thereof from each mobile station; and first neighbor circumstances detecting means for detecting arrangement circumstances of the neighbor cell areas on the basis of the location information and communication circumstances of each mobile station. In this configuration, the receiving means receives the location information and communication circumstances of each mobile station from each mobile station and the first neighbor circumstance detecting means can detect the arrangement circumstances of the neighbor cell areas on the basis of the location information and communication circumstances of each mobile station.

The control apparatus according to the present invention is preferably configured to further comprise receiving means for receiving information about a location of each mobile station and information about the number of simultaneously communicable control apparatus from each mobile station; and second neighbor circumstances detecting means for detecting arrangement circumstances of the neighbor cell areas on the basis of the location information and the information about the number of simultaneously communicable control apparatus from each mobile station. In this configuration, the receiving means receives the location information and the information about the number of simultaneously communicable control apparatus of each mobile station from each mobile station, and the second neighbor circumstance detecting means can detect the arrangement circumstances of the neighbor cell areas on the basis of the location information and the information about the number of simultaneously communicable control apparatus from each mobile station.

The control apparatus according to the present invention is preferably configured to further comprise receiving means for receiving information about a location of each mobile station and information about the number of simultaneously communicable control apparatus from each mobile station; and overlap area detecting means for detecting presence or absence of an overlap area between the cell area formed by the control apparatus and a neighbor cell area, and a location of the overlap area, as arrangement circumstances of the neighbor cell areas, on the basis of the location information and the information about the number of simultaneously communicable control apparatus at the location of each mobile station, received from each mobile station. In this configuration, the receiving means receives from each mobile station the location information and the information about the number of simultaneously communicable control apparatus, of each mobile station, and the overlap area detecting means can detect the presence or absence of an overlap area between the cell area formed by the control apparatus and a neighbor cell area and the location of the overlap area as the arrangement circumstances of the neighbor cell areas on the basis of the location information, and the information about the number of simultaneously communicable control apparatus at the location of each mobile station from each mobile station.

Incidentally, the sequential processing associated with the foregoing cell area formation control methods can also be described in the form of cell area formation control programs to be executed by a computer mounted on the control apparatus, as described below.

Namely, a cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a neighbor circumstances detecting step of detecting circumstances of neighbor cell areas containing informal ion about locations of other control apparatus forming the neighbor cell areas, on the basis of broadcast signals from the other control apparatus provided with information of the circumstances; and a cell area setting step of setting a direction and a coverage of a newly formed cell area on the basis of the result of the detection.

Besides, other cell area formation control programs described below, can be adopted. Another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a home circumstances detecting step of detecting circumstances of a cell area of a home apparatus containing information about a location of the home apparatus; an exchanging step of exchanging the result of the detection and information about circumstances of neighbor cell areas containing information about locations of the other control apparatus forming the neighbor cell areas, with the other control apparatus; and a cell area setting step of setting a direction and a coverage of a newly formed cell area on the basis of the information about the circumstances of the neighbor cell areas obtained from the other control apparatus by the exchange.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a location detecting step of detecting information about locations of other control apparatus forming neighbor cell areas, on the basis of broadcast signals from the other control apparatus provided with the location information, and detecting a location of a home apparatus; a direction & distance detecting step of detecting a mid-direction that bisects a zone between directions from the home apparatus toward respective other control apparatus adjacent to each other, and a distance between the home apparatus and each of the other control apparatus, on the basis of the location information of the home apparatus and the location information of the other control apparatus obtained in the location detecting step; and a cell area setting step of setting a direction and a coverage of a cell area on the basis of a zone between mid-directions adjacent to each other and a distance between the home apparatus and another control apparatus located in the zone, obtained in the direction & distance detecting step.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a location detecting step of detecting information about locations of other control apparatus forming neighbor cell areas, on the basis of broadcast signals from the other control apparatus provided with the location information, and detecting a location of a home apparatus; a direction & distance detecting step of detecting a center position direction from the home apparatus toward a center position of each of other control apparatus adjacent to each other, and a distance between the home apparatus and each of the other control apparatus, on the basis of the location information of the home apparatus and the location information of the other control apparatus obtained in the location detecting step; and a cell area setting step of setting a direction and a coverage of a cell area on the basis of a zone between center position directions adjacent to each other and distances between the home apparatus and other control apparatus located in the zone, obtained in the direction & distance detecting step.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a location detecting step of detecting information about locations of other control apparatus forming neighbor cell areas, on the basis of broadcast signals from the other control apparatus provided with the location information, and detecting a location of a home apparatus; a transmission power information acquiring step of receiving the broadcast signals transmitted from the other control apparatus and each provided with information about a transmission power used in the transmission, to acquire the transmission power information; a reception power measuring step of measuring reception powers of the broadcast signals at the home apparatus; a propagation loss calculating step of calculating propagation losses between the home apparatus and the other control apparatus on the basis of the reception powers and the transmission powers; a cell area arrangement detecting step of detecting arrangement of the cell areas formed by the other control apparatus, on the basis of the propagation losses obtained by the calculation, and the location information of the home apparatus and the location information of the other control apparatus obtained by the detection; and a cell area setting step of setting a direction and a coverage of a newly formed cell area on the basis of the arrangement of the cell areas obtained by the detection.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a location detecting step of detecting information about locations of other control apparatus forming neighbor cell areas, on the basis of broadcast signals from the other control apparatus provided with the location information, and detecting a location of a home apparatus; a direction & distance detecting step of detecting a mid-direction that bisects a zone between directions from the home apparatus toward respective other control apparatus adjacent to each other, and a distance between the home apparatus and each of the other control apparatus, on the basis of the location information of the home apparatus and the location information of the other control apparatus obtained in the location detecting step; a transmission power information acquiring step of receiving the broadcast signals transmitted from the other control apparatus and each provided with information about a transmission power used in the transmission, to acquire the transmission power information; a reception power measuring step of measuring reception powers of the broadcast signals at the home apparatus; a propagation loss calculating step of calculating propagation losses between the home apparatus and the other control apparatus on the basis of the reception powers and the transmission powers; a cell area arrangement detecting step of detecting arrangement of the cell areas formed by the other control apparatus, on the basis of the propagation losses obtained by the calculation, and the location information of the home apparatus and the location information of the other control apparatus obtained by the detection; and a cell area setting step of setting a direction and a coverage of a cell area on the basis of a zone between mid-directions adjacent to each other, arrangement of cell areas formed by another control apparatus located in the zone, and a distance to the other control apparatus, which were obtained by the detection.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a receiving step of receiving information about a location of each mobile station and communication circumstances thereof from each mobile station; a neighbor circumstances detecting step of detecting arrangement circumstances of neighbor cell areas on the basis of the location information and communication circumstances of each mobile station; and a cell area setting step of setting a direction and a coverage of a newly formed cell area on the basis of the arrangement circumstances of the neighbor cell areas obtained by the detection.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a receiving step of receiving information about a location of each mobile station and information about the number of control apparatus simultaneously communicable therewith from each mobile station; a neighbor circumstances detecting step of detecting arrangement circumstances of neighbor cell areas on the basis of the location information and the information about the number of simultaneously communicable control apparatus from each mobile station; and a cell area setting step of setting a direction and a coverage of a newly formed cell area on the basis of the arrangement circumstances of the neighbor cell areas obtained by the detection.

Still another cell area formation control program according to the present invention is a cell area formation control program adapted to a cellular system comprising a control apparatus for controlling formation of a cell area and a plurality of mobile stations; and configured to be executed by a computer mounted on the control apparatus when the control apparatus forms a cell area in the cellular system, the program letting the computer execute: a receiving step of receiving information about a location of each mobile station and information about the number of control apparatus simultaneously communicable therewith from each mobile station; an overlap area detecting step of detecting presence or absence of an overlap area between a cell area formed by the control apparatus and a neighbor cell area and a location of the overlap area as arrangement circumstances of neighbor cell areas on the basis of the location information and the information about the number of simultaneously communicable control apparatus at the location of each mobile station, received from each mobile station; and a cell area setting step of setting a direction and a coverage of a cell area on the basis of the presence or absence of the overlap area and the location information of the overlap area obtained by the detection.

A computer-readable recording medium according to the present invention is a recording medium in which one of the cell area formation control programs described above is recorded.

## BRIEF DESCRIPTION OF THE DRAWINGS

Fig. 1 is a configuration diagram of the cellular system in the first to third embodiments.

Fig. 2 is a block diagram showing the configuration of the base station in the first and second embodiments.

Fig. 3A is a diagram showing the transmission and reception of broadcast signals between base stations in the first embodiment.

Fig. 3B is a diagram showing the setting of cell areas toward respective base stations and detection of mid-directions in the first embodiment.

Fig. 3C is a diagram showing the setting of cell spanning angles and ranges of cell areas in the first embodiment.

Fig. 3D is a diagram showing the setting of directions bisecting the spanning angles of the respective cell areas in the first embodiment.

Fig. 3E is a diagram showing the setting of cell radii in the first embodiment.

Fig. 3F is a diagram showing the setting of spanning angles, cell directions, and cell radii for the respective cells in the first embodiment.

Fig. 4 is a diagram showing the format of the base station broadcast signals in the first embodiment.

Fig. 5 is a flowchart of the cell formation processing in the first and second embodiments.

Fig. 6A is a flowchart of the subroutine of the broadcast signal receiving process in the first embodiment.

Fig. 6B is a flowchart of the cell area detection process in the first embodiment.

Fig. 7A is a flowchart of the subroutine of the cell spanning angle setting process in the first embodiment.

Fig. 7B is a flowchart of the subroutine of the cell direction setting process in the first embodiment.

Fig. 7C is a flowchart of the subroutine of the cell radius setting process in the first embodiment.

Fig. 8A is a diagram showing the transmission and reception of broadcast signals between base stations in the second embodiment.

Fig. 8B is a diagram showing the calculation of directions to the respective base stations in the second embodiment.

Fig. 8C is a diagram showing the setting of two cell areas of cells 1, 2 in the second embodiment.

Fig. 8D is a diagram showing the setting of the spanning angle of cell 1 in the second embodiment.

Fig. 8E is a diagram showing the setting of the direction bisecting the spanning angle in the second embodiment.

Fig. 8F is a diagram showing the setting of the cell radius of cell 1 in the second embodiment.

Fig. 8G is a diagram showing the formation of cell 1 in the second embodiment.

Fig. 8H is a diagram showing the formation of cell 2 in the second embodiment.

Fig. 9 is a diagram showing the format of the base station broadcast signals in the second embodiment.

Fig. 10A is a flowchart of the subroutine of the broadcast signal receiving process in the second embodiment.

Fig. 10B is a flowchart of the cell area detection process in the second embodiment.

Fig. 11A is a flowchart of the subroutine of the cell spanning angle setting process in the second embodiment.

Fig. 11B is a flowchart of the subroutine of the cell direction setting process in the second embodiment.

Fig. 11C is a flowchart of the subroutine of the cell radius setting process in the second embodiment.

Fig. 12 is a block diagram showing the configuration of the base station in the third embodiment.

Fig. 13 is a block diagram showing the configuration of the mobile station in the third embodiment.

Fig. 14A is a diagram showing the transmission and reception of signals between base station and mobile station in the third embodiment.

Fig. 14B is a diagram showing the generation of the map indicating the relationship between locations and numbers of base stations in the third embodiment.

Fig. 14C is a diagram showing the extraction of the farthermost location in each direction in the third embodiment.

Fig. 14D is a diagram showing the setting of each zone between boundary directions as one cell area in the third embodiment.

Fig. 14E is a diagram showing the setting of directions bisecting each zone between boundary directions in the third embodiment.

Fig. 14F is a diagram showing the setting of the reference position for cell radii of cells 1, 2 in the third embodiment.

Fig. 14G is a diagram showing the reduction of the cell radius of cell 2 in the third embodiment.

Fig. 14H is a diagram showing the expansion of the cell radius of cell 1 in the third embodiment.

Fig. 15 is a diagram showing the format of the base station broadcast signals in the third embodiment.

Fig. 16 is a diagram showing the format of the mobile station notification signals in the third embodiment.

Fig. 17 is a flowchart showing the processing of the base station associated with the cell formation processing in the third embodiment.

Fig. 18A is a flowchart of the subroutine of the broadcast signal receiving process in the third embodiment.

Fig. 18B is a flowchart of the cell area detection process in the third embodiment.

Fig. 19A is a flowchart of the subroutine of the cell spanning angle setting process in the third embodiment.

Fig. 19B is a flowchart of the subroutine of the cell direction setting process in the third embodiment.

Fig. 19C is a flowchart of the subroutine of the cell radius setting process in the third embodiment.

Fig. 20 is a flowchart of the processing of the mobile station associated with the cell formation processing in the third embodiment.

Fig. 21 is a diagram showing the problem of occurrence of an area that cannot be covered, in the prior art.

## DESCRIPTION OF THE PREFERRED EMBODIMENTS

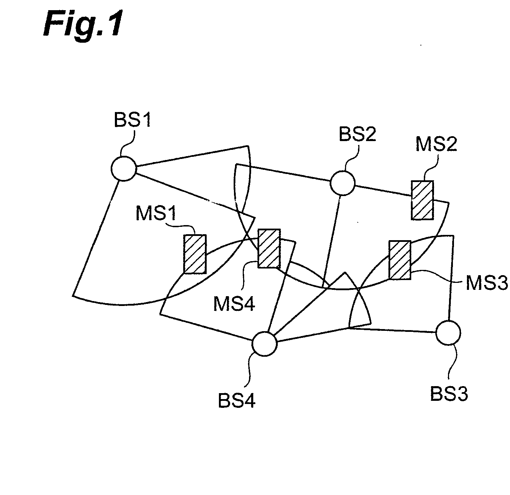

Embodiments of the present invention will be described below in order. However, since a configuration of a mobile communication system is common to the embodiments, it will be generally described referring to Fig. 1. The mobile communication system shown in Fig. 1 is comprised of a plurality of base stations BS1-BS4 as control apparatus according to the present invention, and a plurality of mobile stations MS1-MS4. Each base station is equipped with antennas (e.g., adaptive array antennas) having a function of setting a cell area in an arbitrary direction and with an arbitrary cell spanning angle, as transmitter antennas of pilot signals for formation of cell areas. Each mobile station (e. g., MS1) has a soft handover function of permitting the mobile station to communicate with all communicable base stations under the condition that the mobile station is located in areas of base stations (e.g., BS1, BS2, and BS4).

[First Embodiment]

The first embodiment of the present invention will be described first. The first embodiment will describe an embodiment in which a base station captures the circumstances of neighbor cell areas on the basis of information about locations of its own and other base stations and sets a direction and a coverage of a new cell area on the basis of the circumstances of the neighbor cell areas.

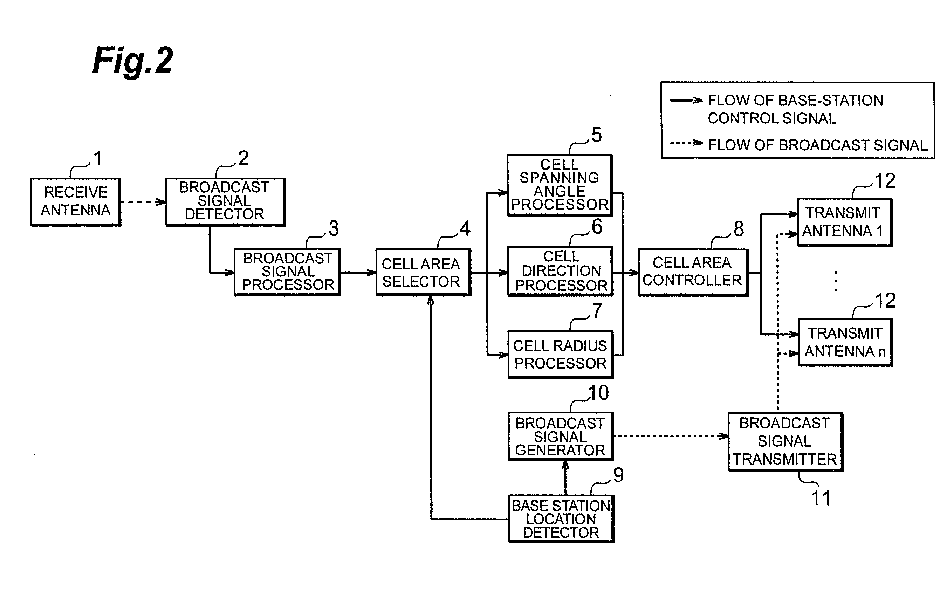

Fig. 2 is a block diagram of the base station. As shown in this Fig. 2, the base station receives broadcast signals from the other base stations through receiver antenna 1 and sends them to broadcast signal detector 2 described next. The broadcast signal detector 2 detects the broadcast signals from the signals received by the receiver antenna 1 and sends them to broadcast signal processor 3. The broadcast signal processor 3 has a function of detecting and storing information about neighbor base stations from information attached to the broadcast signals.

A cell area selector 4 has a function of retrieving the neighbor base station information stored in the broadcast signal processor 3, detecting a cell area that can be set within the home station, storing information necessary for formation of the cell, and ordering a process of setting cell area formation parameters for each detected cell.

Processes of setting a cell forming range, a cell forming direction, and a cell expansion distance, which are parameters necessary for formation of the cell area, are carried out in a cell spanning angle processor 5, a cell direction processor 6, and a cell radius processor 7 to be described hereinafter. The cell spanning angle processor 5 has a function of calculating a spanning angle of a cell on the basis of information about directions to respective base stations and notifying a cell area controller 8 of the result. The cell direction processor 6 has a function of extracting the information about directions to respective base stations, calculating an expansion direction of a cell, and notifying the cell area controller 8 of the result. The cell radius processor 7 has a function of extracting cell radii and base-to-base distances of respective base stations, calculating an expansion distance (cell radius) of a cell, and notifying the cell area controller 8 of the result.

The cell area controller 8 has a function of selecting an optimal antenna out of a plurality of transmitter antennas 12 and setting a transmission power necessary for setting of a desired cell radius, in order to set the direction and spanning angle of the cell area notified of by the cell spanning angle processor 5, cell direction processor 6, and cell radius processor 7.

On the other hand, a base station location detector 9 has a function of detecting information about a location of the home station by means for detecting the information about the location of the base station like the GPS (Global Positioning System), and notifying a broadcast signal generator 10 and the cell area selector 4 of the detected information. The broadcast signal generator 10 has a function of generating a signal to be broadcast to the neighbor base stations, attaching the base station location information from the base station location detector 9 to the broadcast signal, and sending the broadcast signal to a broadcast signal transmitter 11. The broadcast signal transmitter 11 has a function of transmitting the broadcast signal received from the broadcast signal generator 10, from all the transmitter antennas 12. The transmitter antennas 12 are antennas to transmit pilot signals for formation of the cell area and are comprised of antennas (e.g., adaptive array antennas) having a function of setting the cell area in an arbitrary direction and with an arbitrary cell spanning angle as described previously.

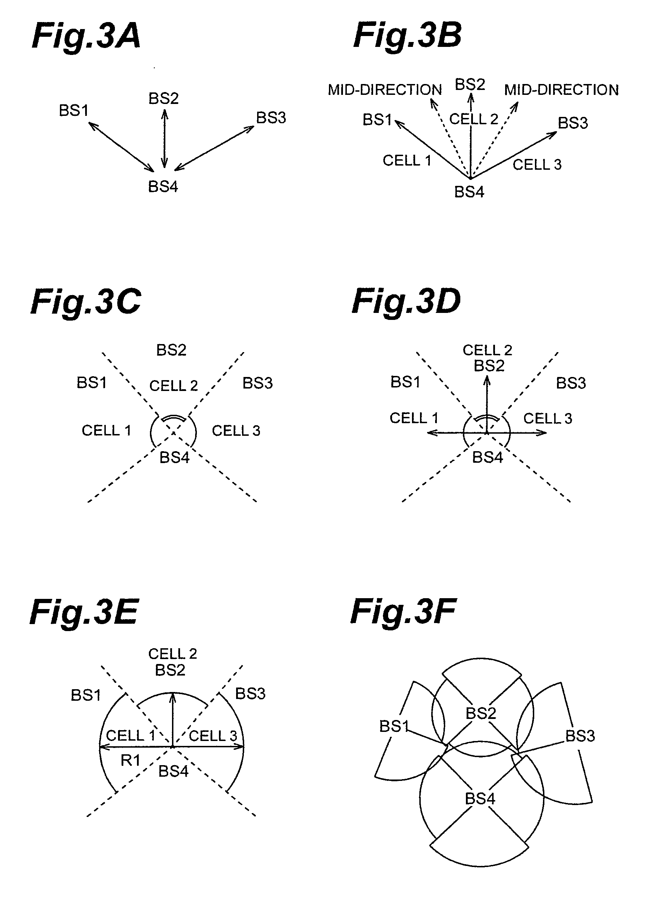

The outline of the cell area formation control method in the first embodiment will be described below with reference to Figs. 3A-3F. Described below is the cell area formation control method by BS4 under the condition that BS4 is newly placed in the situation where three base stations BS1-BS3 have previously been located.

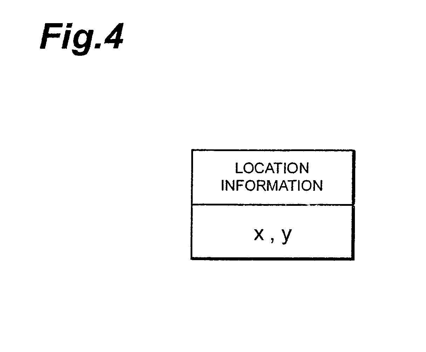

As shown in Fig. 3A, BS4, after installation of the base station, detects the location information of its own (BS4), adds the location information to the broadcast signal, and transmits the broadcast signal to the neighbor base stations (BS1-BS3), and the neighbor base stations also transmit their respective broadcast signals. Each broadcast signal herein is provided with the location information of the base station having transmitted the broadcast signal. The signal format of the broadcast signals includes two-dimensional location information (x,y), for example, represented by latitude and longitude or the like, as shown in Fig. 4.

As shown in Fig. 3B, BS4, receiving the broadcast signals of BS1-BS3, acquires the location information items of respective BS1-BS3 from the base station location information attached to the respective broadcast signals, detects directions of the respective base stations, calculates directions directed from BS4 to the respective base stations (base station directions of the respective base stations), and sets cell areas in the respective base station directions. BS4 also defines cell 1 and cell 3 as cell areas toward BS1 and BS3, and detects a direction (referred to as a "mid-direction" in the first embodiment) directed to a midpoint between a target base station and each base station adjacent thereto (i.e., a center point on a line segment connecting the target base station to the adjacent base station), in order to determine a coverage of each cell area. The mid-direction herein may be any direction other than that described above; it is also possible to adopt a direction that bisects an angle between directions from BS4 toward respective two base stations (BS1, BS3) adjacent to BS2, while achieving like operation and effect.

As shown in Fig. 3C, BS4 sets as a spanning angle of each cell an angle greater than an angle between a mid-direction described above and a direction toward a target base station, and sets a range covering the set spanning angle from the mid-direction, as a coverage of each cell area. BS4 also sets a range between two directions connecting BS4 to the respective midpoints to the base stations BS1, BS3 adjacent to BS2, as a set coverage of cell 2 being a cell area toward BS2, and sets an angle of the range as a spanning angle.

As shown in Fig. 3D, BS4 sets a direction that bisects the spanning angle of each cell area, as an expansion direction (cell direction) of the cell area.

As shown in Fig. 3E, BS4 assumes sector cells of sector form with the set spanning angles to be cell areas and assumes cell radii to be expansion distances of the respective cell areas. Then BS4 calculates a base-to-base distance L to the home station on the basis of the location information of each target base station and calculates a cell radius R according to Eq (1) below to set the cell radius.

$$R = L \times k \qquad (1)$$

(where k is a parameter indicating an overlap factor between cells, $0.5 \leq k < 1.0$)

As shown in Fig. 3F, BS4 sets the spanning angle, cell direction, and cell radius for each cell, and thereafter adjusts the antenna and transmission power so as to establish the set cell radius across the set spanning angle with respect to the set cell direction, thereby expanding each cell area. After this, BS4 terminates the formation of cell areas for BS2 and BS1, BS3 adjacent thereto. Thereafter, BS4 performs the cell area formation in similar fashion as to the other base stations (BS1, BS3) and the adjacent base stations thereof.

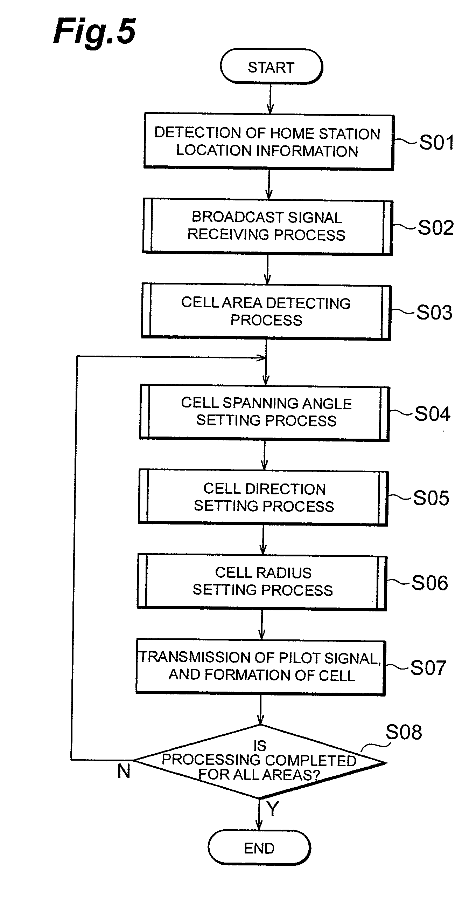

The cell area formation control processing in the first embodiment will be described below with reference to Figs. 5 to 7. Fig. 5 shows the main routine of the processing procedure of the base station.

Each base station is configured so that the base station location detector 9 detects the location of the home station, the broadcast signal generator 10 attaches the detected location to the broadcast signal, and the broadcast signal transmitter 11 transmits the broadcast signal through the transmitter antennas 12 to the neighbor base stations.

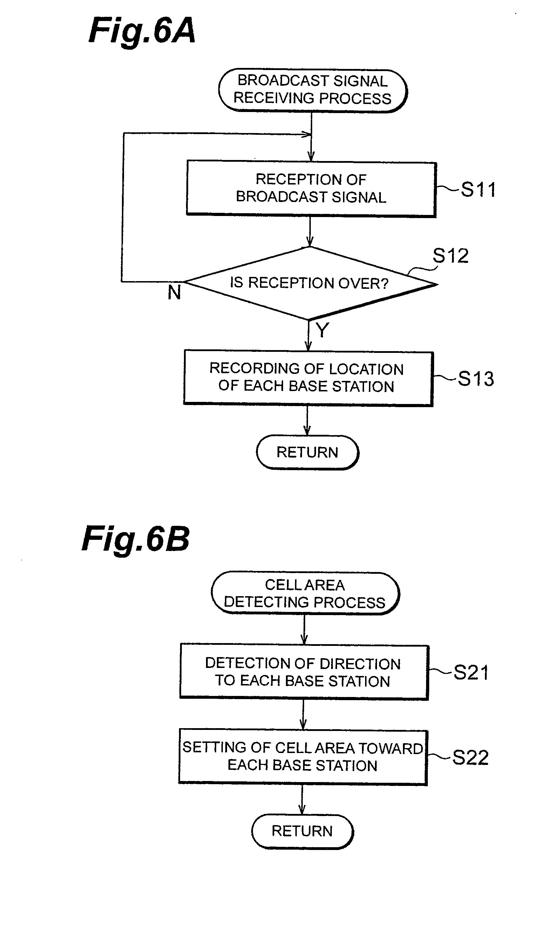

The base station having determined to change cells starts executing the main routine of Fig. 5. The "base station having determined to change cells" herein corresponds to BS4 in Fig. 3 described above. The base station is configured so that the base station location detector 9 detects the home location information (S01) and so that the broadcast signal detector 2 detects the broadcast signals from the neighbor base stations and thereafter transmits the broadcast signals to the broadcast signal processor 3 and then the broadcast signal processor 3 performs a broadcast signal process of Fig. 6A (S02).

In the broadcast signal process of Fig. 6A, the processor receives the broadcast signals from the neighbor base stations during a predetermined wait time (S11 and S12) , extracts the location information of each base station after completion of the reception, temporarily records the information of each base station (S13), and returns to the main routine of Fig. 5.

After completion of the broadcast signal receiving process, the cell area selector 4 performs a cell area detecting process of Fig. 6B (S03). In the cell area detecting process of Fig. 6B, the directions to the respective base stations are detected from the recorded location information of the neighbor base stations (S21), cell areas are set for the respective directions to the respective base stations (S22) , and then the flow returns to the main routine of Fig. 5.

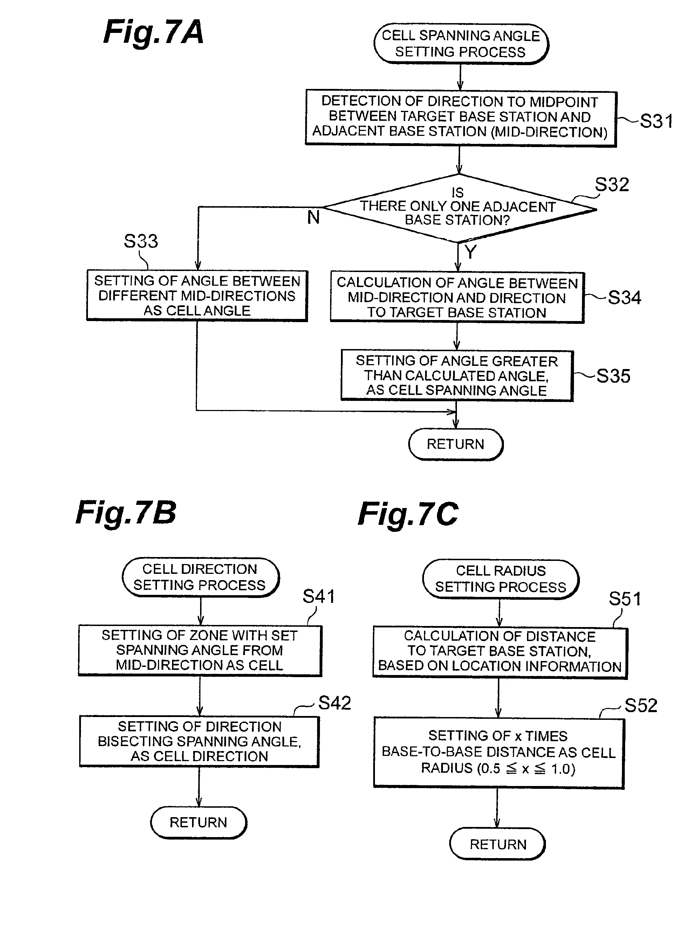

After the cell area detecting process, the following processes (S04-S07) are carried out for each detected cell area. First, the cell spanning angle processor 5 performs a cell spanning angle setting process of Fig. 7A (S04). In this cell spanning angle setting process, the processor detects a direction ("mid-direction" in the first embodiment) directed toward a midpoint between a base station within one cell area as a target (a target base station) and a base station in an adjacent cell area (an adjacent base station) (S31). If there is only one adjacent base station and only one mid-direction herein (in the case of the affirmative judgment in S32), the processor calculates an angle between the mid-direction and the direction directed to the target base station (S34); in order to define a range of an angle a fixed value greater than the mentioned angle, as a coverage of a cell area, the processor sets as a spanning angle of the cell an angle the fixed value greater than the angle calculated in S34 (S35) ; and then the processor returns to the main routine of Fig. 5.

On the other hand, if there are two adjacent base stations and two mid-directions (in the case of the negative judgment in S32), the processor sets as a spanning angle of the cell an angle of a range between those two mid-directions and notifies the cell area controller 8 of the angle (S33) ; and then the processor returns to the main routine of Fig. 5.

After the cell spanning angle setting process, the cell direction processor 6 performs a cell direction setting process of Fig. 7B (S05). In this cell direction setting process, the processor sets as a cell area a range with the spanning angle set in the foregoing process from the mid-direction (S41); the processor sets as a cell direction a direction that bisects the spanning angle, and notifies the cell area controller 8 of the cell direction (S42); and then the processor returns to the main routine of Fig. 5.

After the cell direction setting process, the cell radius processor 7 performs a cell radius setting process of Fig. 7C (S06) . In this cell radius setting process, the processor calculates a distance L to a base station located in each cell direction, based on the location information of the base station and the location information of the home station (S51), and calculates a cell radius R according to Eq (1) below (S52). The cell radius processor 7 notifies the cell area controller 8 of the calculation result of the cell radius.

$$R = L \times k \qquad (1)$$

(where k is the parameter indicating the overlap factor between cells, $0.5 \leq k \leq 1.0$)

After the cell area controller 8 is notified of the cell coverage/cell direction/cell radius, it adjusts the antenna and transmission power so as to achieve the desired cell direction/cell spanning angle/cell radius, and transmits the pilot signal to form the cell (S07).

The above processes of S04-S07 are also carried out in similar fashion for the other cell areas. After the processes are carried out for all the cell areas (with the affirmative judgment in S08), the cell formation processing of Fig. 5 is terminated.

According to the first embodiment described above, the base station can set a cell area of desired size in an arbitrary direction, whereby it is feasible to reduce unavailable areas of service appearing between adjacent cells, as compared with the method by which the cell areas can be set only in particular directions as before. By detecting the arrangement information of neighbor base stations, the optimal set direction of each cell area can be set based thereon. Each base station can optimize its cell setting every time the arrangement of base stations is modified.

[Second Embodiment]

The second embodiment of the present invention will be described below. The second embodiment will describe an embodiment in which a base station captures the circumstances of neighbor cell areas in consideration of propagation loss from the other base stations, in addition to the location information of its own and other base stations and sets the direction and coverage of the new cell area on the basis of the circumstances of the neighbor cell areas. The configuration of the base station is much the same as that in Fig. 2 described previously, and thus the description thereof is omitted herein.

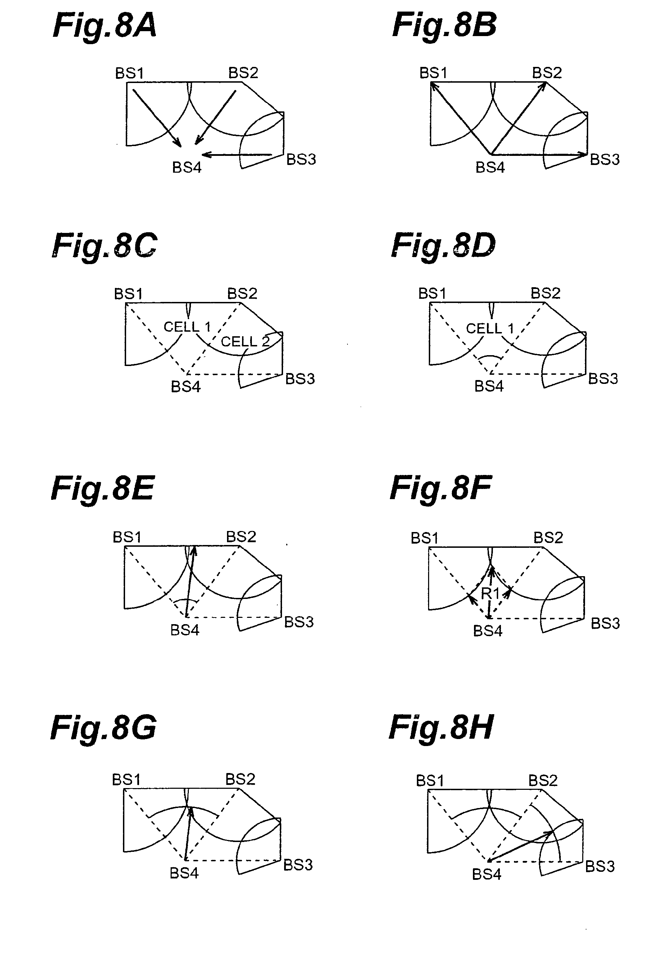

The outline of the cell area formation control method in the second embodiment will be first described with reference to Figs. 8A-8H. Described herein is the cell area formation control method of BS4 under the condition that BS4 is newly placed in the situation where the three base stations BS1-BS3 have previously been located.

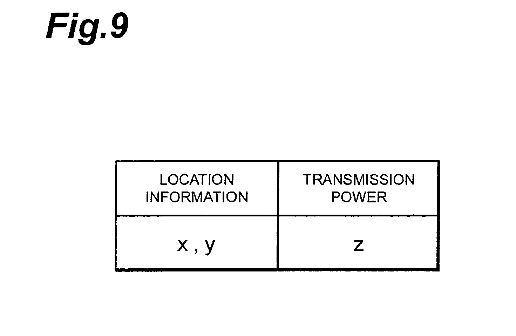

As shown in Fig. 8A, BS4, after installation of the base station, detects the location information of its own (BS4), attaches the location information to the broadcast signal, and transmits the broadcast signal to the neighbor base stations (BS1-BS3), and the neighbor base stations also transmit similar broadcast signals. Each broadcast signal herein is provided with the location information of the base station having transmitted it. The signal format of the broadcast signals is, for example, one including two-dimensional location information (x,y) represented by latitude and longitude or the like and information of a transmission power z necessitated for transmission of the broadcast signal, as shown in Fig. 9.

As shown in Fig. 8B, BS4, receiving the broadcast signals of BS1-BS3, acquires location information items of respective BS1-BS3 from the base station location information attached to each broadcast signal, and calculates a direction from BS4 toward each base station (a base station direction of each base station).

As shown in Fig. 8C, BS4 defines a range between two adjacent base station directions as one cell area, and thus sets two cell areas of cell 1 and cell 2. Namely, the range between the base station direction of BS1 and the base station direction of BS2 is defined as cell 1, and the range between the base station direction of BS2 and the base station direction of BS3 as cell 2.

Thereafter, the following processing is carried out for each cell area. The cell areas herein are assumed to be sector cells of sector form, and the description herein focuses on only the processing for cell 1.

As shown in Fig. 8D, BS4 calculates an angle between the direction to BS1 and the direction to BS2 and defines the angle as an angle spanning the sector cell of cell 1 (spanning angle).

As shown in Fig. 8E, BS4 then calculates a direction that bisects the spanning angle thus set, and defines the direction as an expansion direction of the cell area (cell direction).

As shown in Fig. 8F, BS4 then measures the reception power of the broadcast signal received from the base station BS1, reads the transmission power information attached to the broadcast signal, and calculates a propagation loss about BS1 from the reception power and the transmission power. BS4 then calculates the cell radius established by BS1, from the propagation loss. BS4 also calculates the distance between BS4 and BS1 on the basis of the location information of BS1 in the broadcast signal from BS1, and determines the difference between the calculated distance and the cell radius of BS1. The difference thus determined provides the distance from the home station BS4 to the cell edge of BS1 (cell edge distance). The processing from the reception power measurement of the broadcast signal is also executed as to BS2 to determine the distance from the home station BS4 to the cell edge of BS2 (cell edge distance) . Then BS4 determines vectors with respective lengths equal to the cell edge distances from BS4 in the respective directions to BS1 and to BS2, and determines a resultant vector of these two vectors. The length of this resultant vector is set as the cell radius of cell 1.

As shown in Fig. 8G, BS4, after the determination of the cell spanning angle, cell direction, and cell radius of cell 1, adjusts the antenna and transmission power so as to satisfy the desired spanning angle and cell radius in each cell direction, thereby forming cell 1.

Thereafter, BS4 also determines the cell spanning angle, cell direction, and cell radius of cell 2 in much the same manner as above, and adjusts the antenna and transmission power, thereby forming cell 2 as shown in Fig. 8H.

The cell area formation control processing in the second embodiment will be described below with reference to Figs. 5, 10, and 11. The main routine herein is the one shown in Fig. 5 as in the first embodiment.

Each base station is assumed to be configured so that the base station location detector 9 detects the location of the home station, the broadcast signal generator 10 attaches the detected location to the broadcast signal, and the broadcast signal transmitter 11 transmits the broadcast signal through the transmitter antennas 12 to the neighbor base stations.

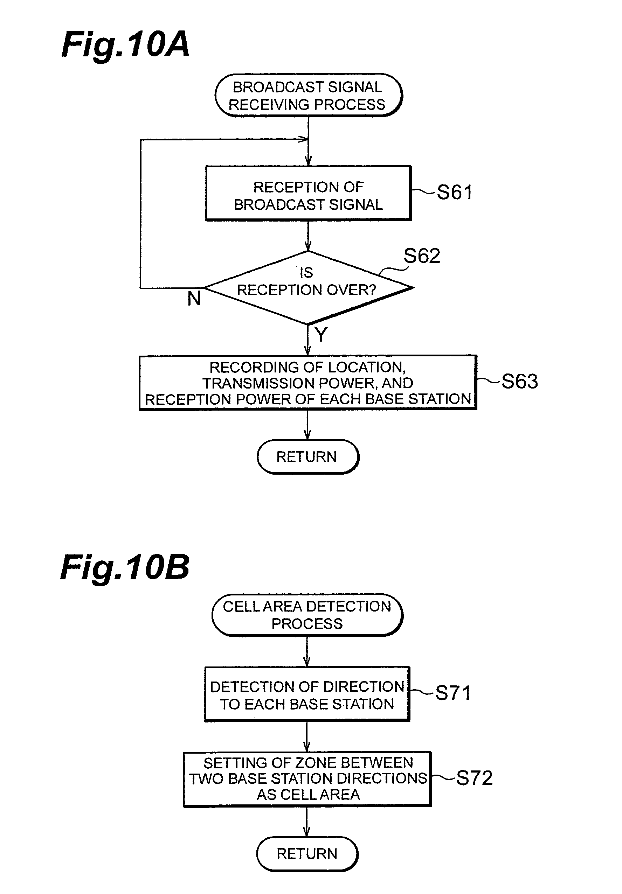

The base station having determined to change cells starts executing the main routine of Fig. 5. The "base station having determined to change cells" herein corresponds to BS4 in Fig. 8 described previously. The base station detects the home station location information in the base station location detector 9 (S01), further detects the broadcast signals from the neighbor base stations in the broadcast signal detector 2, thereafter sends the broadcast signals to the broadcast signal processor 3, and then performs the broadcast signal process of Fig. 10A in the broadcast signal processor 3 (S02).

In the broadcast signal process of Fig. 10A, the processor receives the broadcast signals during a predetermined wait time (S61 and S62), extracts the location information and transmission power information from the broadcast signals of the respective base stations after completion of the reception and simultaneously detects the reception powers of the broadcast signals, temporarily saves those information items (location information, transmission power information, and reception power information) (S63), and then returns to the main routine of Fig. 5.

After completion of the broadcast signal receiving process, the cell area selector 4 performs the cell area detection process of Fig. 10B (S03). In this cell area detection process, the selector detects the direction to each base station from the recorded location information of the neighbor base stations (S71), sets as a cell area a range between two base station directions (S72), and then returns to the main routine of Fig. 5.

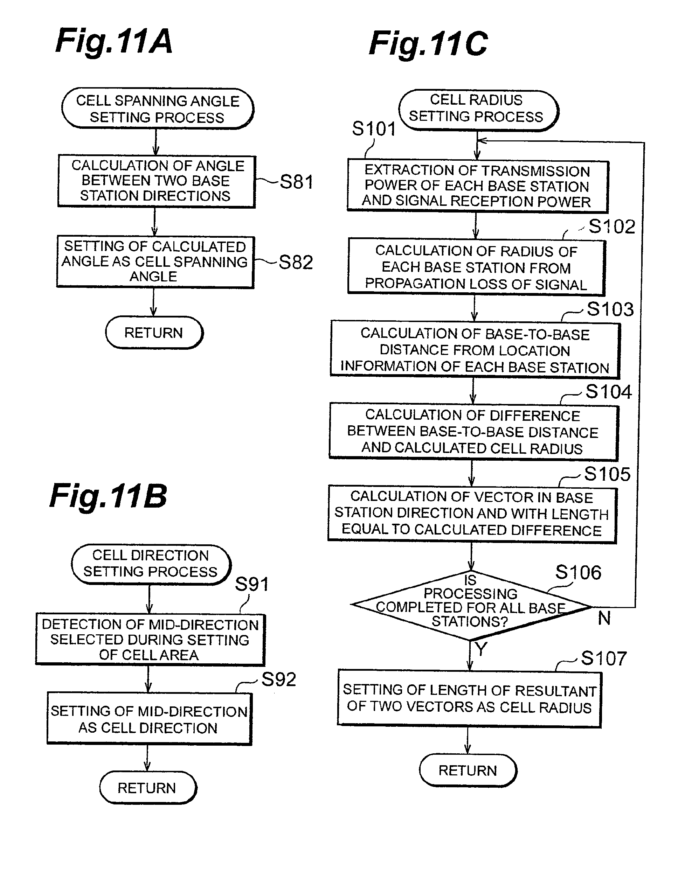

After the cell area detection process, the following processes (S04-S07) are carried out for each detected cell area. First, the cell spanning angle processor 5 performs the cell spanning angle setting process of Fig. 11A (S04). In this cell spanning angle setting process, the processor calculates an angle between two base station directions (S81). The processor sets the calculated angle as a spanning angle of a cell, notifies the cell area controller 8 of the spanning angle of the cell (S82), and then returns to the main routine of Fig. 5.

After the cell spanning angle setting process, the cell direction processor 6 performs the cell direction setting process of Fig. 11B (S05). In this cell direction setting process, the processor detects a direction that bisects the measured spanning angle (referred to as a "mid-direction" in the second embodiment) (S91), sets the mid-direction as a direction to expand a cell area (cell direction) andnotifies the cell area controller 8 of the direction (S92), and then returns to the main routine of Fig. 5.

After the cell direction setting process, the cell radius processor 7 performs the cell radius setting process of Fig. 11C (S06). In this cell radius setting process, the processor performs the following processes (3101-3105) for each base station in the cell area.

Namely, the processor measures the reception power of the broadcast signal from one base station and extracts the transmission power value attached to the broadcast signal (S101); the processor then calculates the propagation loss from these reception power information and transmission power information and calculates the cell radius established by the base station having transmitted the broadcast signal (S102). Furthermore, the processor calculates the distance to the base station (base-to-base distance) from the location information of the base station and the location information of the home station (S103). The processor then calculates the difference between the calculated base-to-base distance and cell radius (S104) and determines the vector toward the base station with the length equal to the calculated difference (S105).

The processor determines such a vector toward the base station for every base station and, after completion of the processes of S101-S105 for all the base stations (in the case of the affirmative judgment in S106), the processor combines two vectors, sets the length of the resultant vector obtained, as a cell radius, and notifies the cell area controller 8 of this cell radius (S107). Thereafter, the processor returns to the main routine of Fig. 5.

The cell area controller 8, after notified of the cell range/cell direction/cell radius, adjusts the transmitter antenna 12 and transmission power so as to satisfy the desired cell direction/spanning angle/cell radius, thereby forming a cell (S07).

The above processes of S04-S07 are also carried out similarly for the other cell areas. After completion of the processing for all the cell areas (with the affirmative judgment in S08), the cell formation processing of Fig. 5 is terminated.

According to the second embodiment described above, the propagation losses between base stations are calculated and the cell coverage of each cell can be detected more accurately on the basis of the propagation losses between base stations obtained by the calculation; therefore, the second embodiment provides the peculiar effect of capability of setting the cell coverage more accurately.

[Third Embodiment]

The third embodiment of the present invention will be described below. The third embodiment will describe an embodiment in which a base station captures the circumstances of neighbor cell areas in consideration of communication circumstances of mobile stations in neighbor cell areas (the number of base stations with which each mobile station can simultaneously communicate), in addition to the location information of the home station and other base stations, and sets the direction and coverage of the new cell area on the basis of the circumstances of the neighbor cell areas.

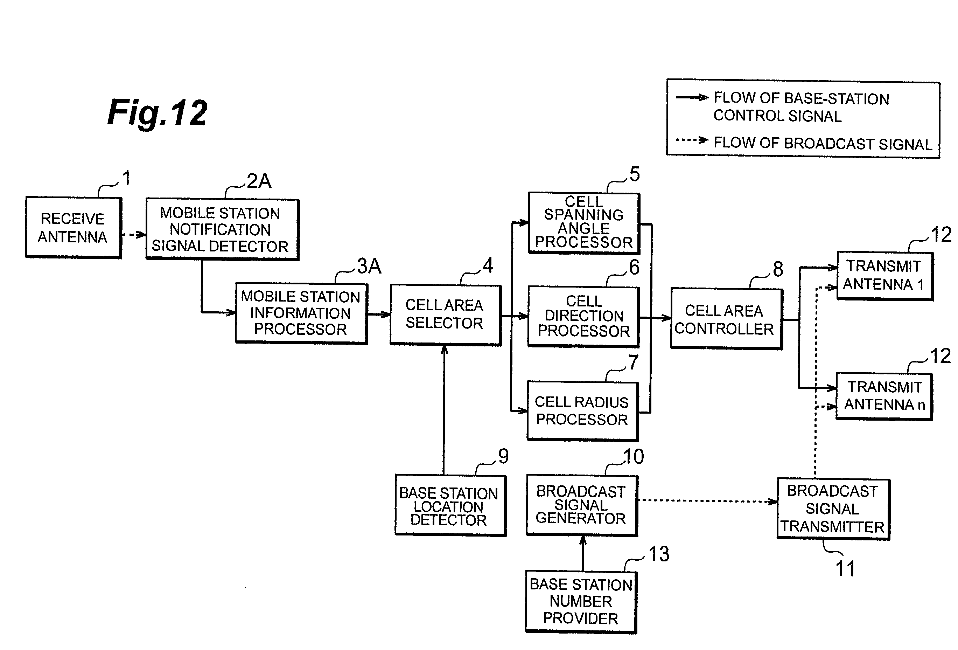

Fig. 12 shows a block diagram of the base station. As shown in Fig. 12, the base station receives signals transmitted from mobile stations, through the receiver antenna 1 and then sends them to a mobile station notification signal detector 2A described next. The mobile station notification signal detector 2A detects signals of the mobile stations from the signals received by the receiver antenna 1 and sends them to a mobile station information processor 3A. The mobile station information processor 3A extracts information about locations of the mobile stations and information about numbers of communicable base stations (base stations simultaneously communicable at the current location) from the information described in the signals, and stores the location information and the information about the number of base stations communicable at the current site.

The cell area selector 4 has a function of retrieving the location information and the information of the number of communicable base stations, stored in the mobile station information processor 3A, detecting areas where a mobile station can communicate with only one base station and areas where a mobile station can communicate with a plurality of base stations, and instructing the following three processors (cell spanning angle processor 5, cell direction processor 6, and cell radius processor 7) to set a cell in each area.

In order to set the cell spanning angle, cell direction, and cell radius in each cell, the cell spanning angle processor 5, cell direction processor 6, and cell radius processor 7 described below calculate the respective parameters. Namely, the cell spanning angle processor 5 has a function of extracting the area information from the cell area selector 4, calculating the spanning angle of the cell, and notifying the cell area controller 8 of the result. The cell direction processor 6 has a function of extracting the area information from the cell area selector 4, calculating the expansion direction of the cell, and notifying the cell area controller 8 of the result. The cell radius processor 7 has a function of extracting the area information from the cell area selector 4, calculating the expansion distance of the cell (cell radius), and notifying the cell area controller 8 of the result.

The cell area controller 8 has a function of selecting an optimal antenna from the transmitter antennas 12 and setting the transmission power satisfying the desired cell radius, in order to set the direction, spanning angle, and cell radius of the cell area notified of by the cell direction processor 6, cell spanning angle processor 5, and cell radius processor 7, respectively.

The base station location detector 9 has a function of detecting the location of the home station and transmitting the location information of the home station to the cell area selector 4. A base station number provider 13 has a function of providing a base station number of the home station and transmitting it to the broadcast signal generator 10, and the broadcast signal generator 10 has a function of generating the broadcast signal to notify the mobile stations in the cell of the base station number of the home station and transmitting it to the broadcast signal transmitter 11. The broadcast signal transmitter 11 has a function of transmitting the broadcast signal received from the broadcast signal generator 10, from all the transmitter antennas 12 to the interior of the service area of the home station. The transmitter antennas 12 are antennas to transmit pilot signals for construction of the cell area and are comprised of antennas (e.g., adaptive array antennas) having the function of setting the cell area in an arbitrary direction and with an arbitrary cell spanning angle as described previously.

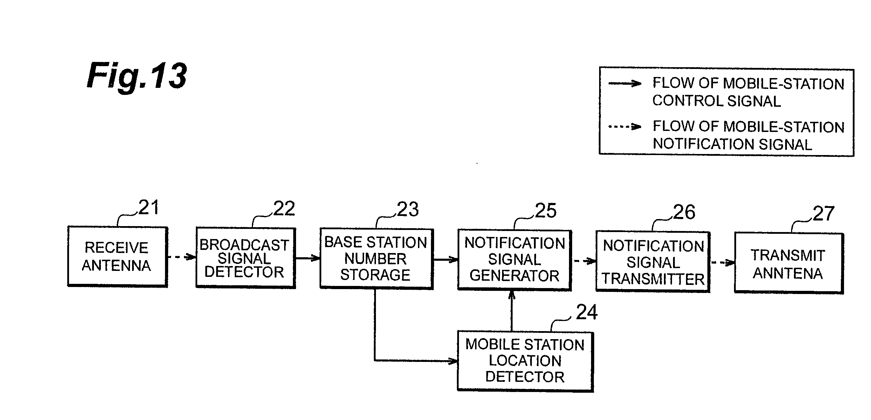

Fig. 13 is a block diagram of each mobile station. As shown in Fig. 13, the mobile station sequentially receives the broadcast signals transmitted from the base stations, through a receiver antenna 21 and sends them to a broadcast signal detector 22. The broadcast signal detector 22 has a function of extracting the base station number information from the received broadcast signals and notifying a base station number storage 23 of the information. The base station number storage 23 has a function of storing the base station numbers notified of by the broadcast signal detector 22. The base station number storage 23 also has a function of updating stored data with change in the location of the mobile station, in accordance with a location change signal notified of by a mobile station location detector 24.

The mobile station location detector 24 has a function of sequentially detecting the current location of the mobile station by such a location detector as the GPS, transmitting a location change notification to the base station number storage 23 at every change of location, and notifying a notification signal generator 25 of information of the current location. The notification signal generator 25 sequentially checks the location information notified of by the mobile station location detector 24, generates a mobile station signal containing numbers of all base stations notified of in response to a request for numbers of currently communicable base stations to the base station number storage 23 at every change in the location of the mobile station, and the current location information of the mobile station notified of by the mobile station location detector 24, and transmits the signal to the notification signal transmitter 26. This mobile station signal is transmitted from the notification signal transmitter 26 via the transmitter antenna 27 to all the currently communicable base stations.

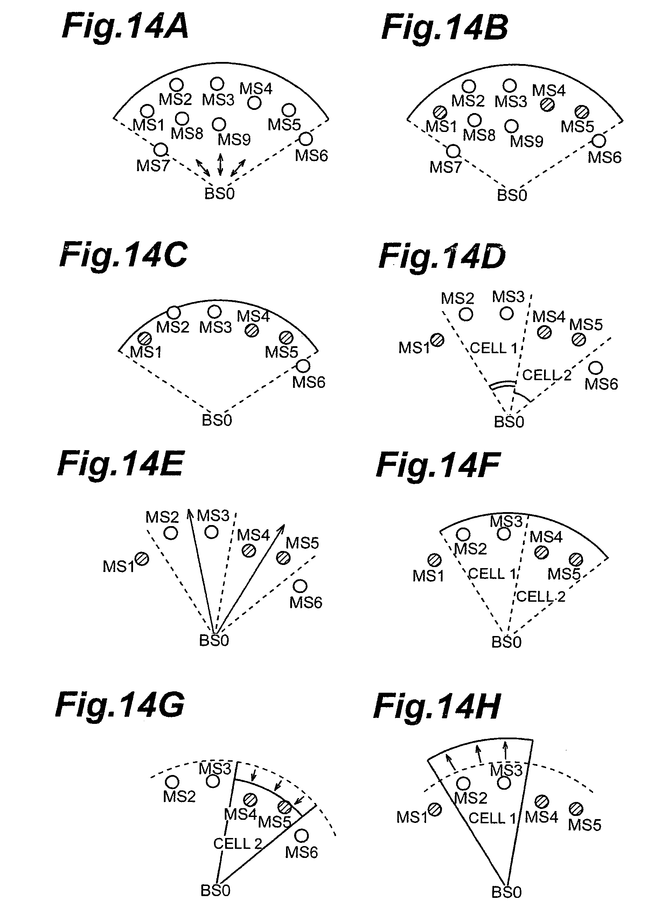

The outline of the cell area formation control method in the third embodiment will be described below with reference to Figs. 14A-14H. Described herein is the cell area formation control method by BS0 under the condition that the base station BS0 is placed in the situation where a plurality of mobile stations MS1-MS9 are present.

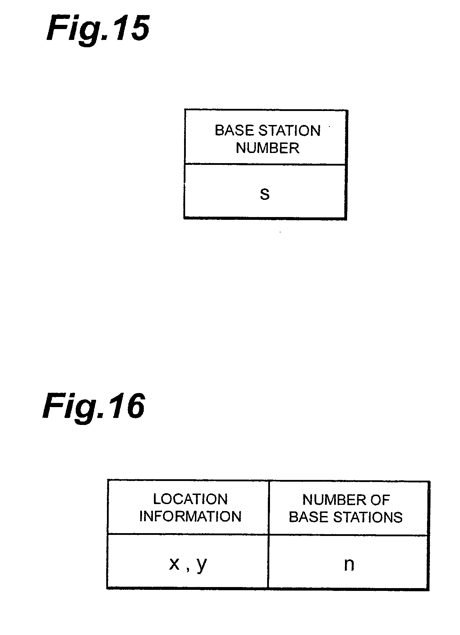

As shown in Fig. 14A, BS0 sends the broadcast signal into the cell of the home station. Here the broadcast signal transmitted from BS0 is provided with the number of BS0 having transmitted the signal. Namely, the signal format of the broadcast signal contains information about the base station number of the base station having transmitted the broadcast signal, as shown in Fig. 15.

Furthermore, each of MS1-MS9, receiving the broadcast signal, calculates the number n of base stations communicable therewith, from the base station number provided to the signal, detects the location of its own, attaches the location information and the number of base stations to the mobile station notification signal, and transmits it to the communicable base stations (BS0 herein). The signal format of the mobile station notification signal contains the two-dimensional location information (x,y) represented by latitude and longitude or the like and information about the number n of base stations communicable with the mobile station, as shown in Fig 16.

Then BS0 receives the mobile station notification signals, confirms the location information and the numbers of base stations communicable at the respective locations, and makes a map indicating the relationship between locations and numbers of communicable base stations (see Fig. 14B). Then BS0 extracts a farthermost location in each direction (the location of the cell edge of sector form with the radius being the distance between BS0 and MS2 farthermost from BS0 herein) from this map, as shown in Fig. 14C.

As shown in Fig. 14D, BS0 then detects boundary locations (locations indicated by dashed lines in Fig. 14D) each between a location where the number of communicable base stations is one and a location where the number of communicable base stations is two or more, from the information about the numbers of communicable base stations at the respective locations, and sets each zone between directions along two adjacent boundary locations (hereinafter referred to as boundary directions) as one cell area. For example, cell 1 and cell 2 are set herein.

Then BS0 detects a direction that bisects a spanning angle of each cell (referred to as a "mid-direction" in the third embodiment) and sets each mid-direction as a cell direction, as shown in Fig. 14E.

Then BS0 changes the cell radius of each of cell 1 in which the mobile stations MS2, MS3 communicable with only one base station are located and cell 2 in which the mobile stations MS4, MS5 communicable with a plurality of base stations are located, in the following manner, as shown in Figs. 14F-14H. Namely, cell 2 is changed in setting so that the cell radius becomes equal to the distance from BS0 to MS5 being the farthermost mobile station in the cell (from Fig. 14F to Fig. 14G), and the cell formation is terminated.

In cell 1 on the other hand, BS0 increases the cell radius by a fixed value from the current cell radius of Fig. 14F (Fig. 14H). In this case, it is desirable to again perform the processing from the aforementioned base station broadcast signal transmission process and mobile station notification signal reception process in the state in which the transmission power is increased by the cell area controller 8 so as to meet the increased cell radius.

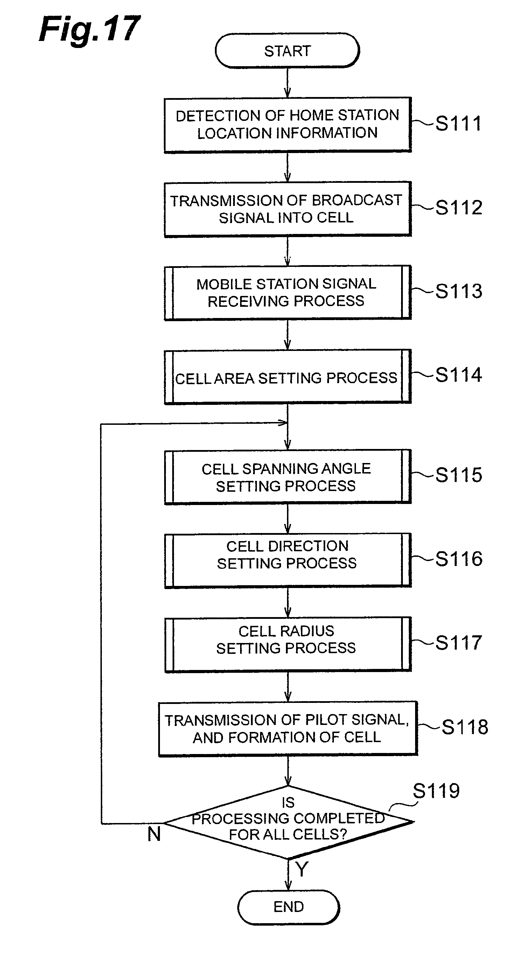

The cell area formation control processing in the third embodiment will be described below with reference to Figs. 17, 18, 19 and 20.

Each base station is assumed to be configured so that the base station location detector 9 detects the location of the home station, the broadcast signal generator 10 attaches the detected location to the broadcast signal, and the broadcast signal transmitter 11 transmits the broadcast signal through the transmitter antennas 12 to the neighbor base stations.

The base station having determined to change cells starts executing the main routine of Fig. 17. The base station detects the home station location information in the base station location detector 9 (S111); and the base station further provides the broadcast signal with a number peculiarly assigned to each base station in the broadcast signal generator 10 and transmits the broadcast signal from the broadcast signal transmitter 11 through the transmitter antennas 12 into the cell (S112).

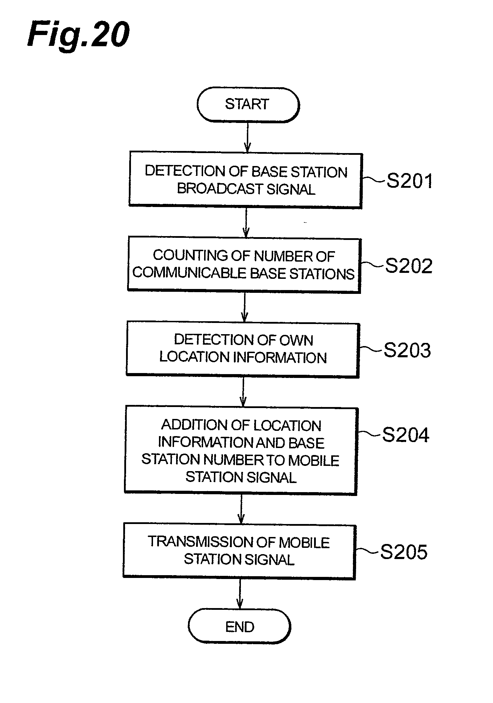

On the other hand, the processing routine of Fig. 20 is executed in the mobile stations . Each mobile station first detects the broadcast signals from the base stations during a predetermined period in the broadcast signal detector 22 (S201); the mobile station stores the base station number information added to the broadcast signals, in the base station number storage 23 and counts the number of base stations communicable with the mobile station after a lapse of a predetermined period (S202). Then the mobile station location detector 24 detects the location information of the mobile station (S203); the notification signal generator 25 provides the mobile station notification signal with the home station location information and the number of communicable base stations (S204); the notification signal transmitter 26 transmits the mobile station notification signal through the transmitter antenna 27 to all the communicable base stations (S205); the processing of Fig. 20 is then terminated.

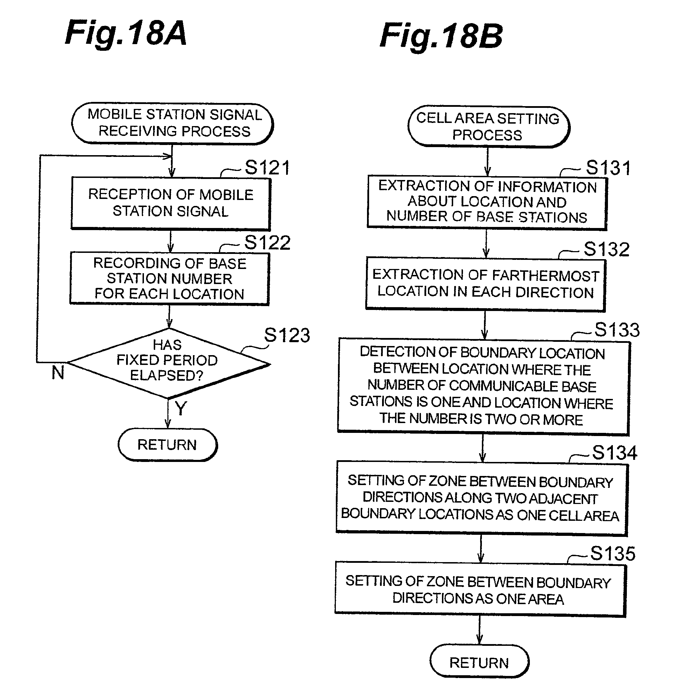

The base station, receiving this mobile station notification signal, performs the following mobile station signal receiving process of Fig. 18A (S113 in Fig. 17). In this mobile station signal receiving process, the mobile station notification signal detector 2A receives the mobile station notification signal from each mobile station (S121), and the mobile station information processor 3A extracts the location information and the number of communicable base stations of each mobile station and records the location information and the information of the number of base stations communicable at the location (S122). These processes of S121 and S122 are carried out for a predetermined time period (S123), and a return is made to the main routine of Fig. 17 after a lapse of the predetermined period.

After the mobile station signal receiving process, the cell area selector 4 performs the following cell area setting process of Fig. 18B (S114). In this cell area setting process, the selector extracts the map indicating the relationship between locations of mobile stations and numbers of communicable base stations (see Fig. 14B) (S131), and extracts the farthermost location in each direction (the location of the cell edge of sector form with the radius being the distance between BS0 and MS2 farthest from BS0 in the example of Fig. 14C) from the map (S132). Then the selector detects each boundary location (e.g., the locations indicated by the dashed lines in Fig. 14D) between a location where the number of communicable base stations is one and a location where the number of communicable base stations is two or more, from the information about the numbers of base stations communicable at the locations of the respective mobile stations (S133), and then sets each zone between two boundary directions adjacent to each other along boundary locations, as one cell area (S134). For example, cell 1 and cell 2 are set as shown in Fig. 14D. Furthermore, each zone between boundary directions is set as one area (S135), and a return is made to the main routine of Fig. 17.

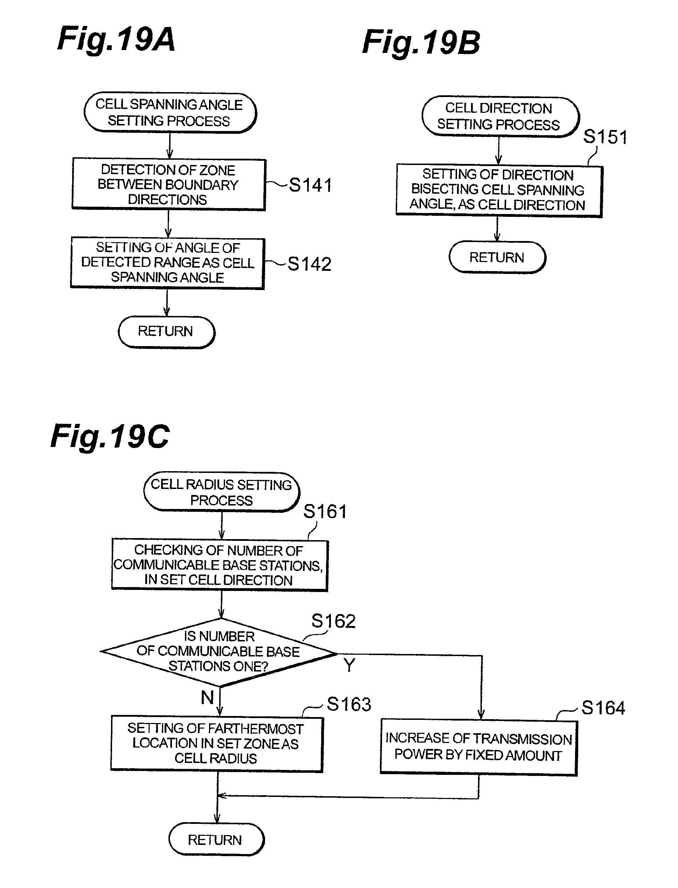

After the cell area setting process, the following processes of S115-S118 are carried out for each detected cell area. In S115, the cell spanning angle processor 5 performs the cell spanning angle setting process of Fig. 19A. In this cell spanning angle setting process, the processor detects a zone between boundary directions (S141), sets an angle of the detected zone as a cell spanning angle and notifies the cell area controller 8 of the angle (S142), and then returns to the main routine of Fig. 17.

After the cell spanning angle setting process, the cell direction processor 6 performs the cell direction setting process of Fig. 19B (S116). In this cell direction setting process, the processor detects a direction that bisects the spanning angle (a mid-direction in the third embodiment), sets the mid-direction as a cell direction and notifies the cell area controller 8 of the direction (S151), and returns to the main routine of Fig. 17.

After the cell direction setting process, the cell radius processor 7 performs the cell radius setting process of Fig. 19C (S117). In this cell radius setting process, the processor checks the number of communicable base stations in the set cell direction (S161), in order to group a plurality of cells of the home station into two groups of cells where mobile stations communicable with only one base station are located and cells where mobile stations communicable with a plurality of base stations are located (S161). When the result is that the number of communicable base stations is two or more (in the case of the negative judgment in S162), the processor sets the distance from the home station to the location of the farthermost mobile station in the cell as a cell radius, notifies the cell area controller 8 of the cell radius (S163), and returns to the main routine of Fig. 17.

On the other hand, when the number of communicable base stations is one (in the case of the affirmative judgment in S162), the processor increases the current cell radius by the fixed value, as shown in Fig. 14H, notifies the cell area controller 8 of the result (S164), and returns to the main routine of Fig. 17. The processing may also be arranged so that the processor increases the current cell radius by the fixed value in S164 of Fig. 19C, notifies the cell area controller 8 of the result, thereafter halts the processing heretofore, and returns to S112 of Fig. 17 and the base station again starts the processing from the process of transmitting the broadcast signal. Namely, the processing from S112 may be again executed in a state in which the transmission power is increased by the cell area controller 8 so as to satisfy the increased cell radius.

The cell area controller 8, after notified of the cell coverage/cell direction/cell radius, adjusts the transmission power so as to achieve the desired cell radius and thereby adjusts the transmitter antenna 12 so as to form the coverage in the set cell direction and with the set cell spanning angle, and transmits the pilot signal, thereby forming the cell area (S118).

The above processes of S115-S118 are also carried out similarly for the other cell areas. After completion of the processing for all the cell areas (with the affirmative judgment in S119), the cell formation processing of Fig. 17 is terminated.

According to the third embodiment described above, the base stations do not have to share any information and the cell area formation control can be performed by only one base station without any information from the neighbor base stations. It also becomes feasible to detect a direction of an area without overlap between cells on the basis of the location information of many mobile stations and to set a region of a cell area to be expanded, more accurately.

As described above, the present invention permits the direction and coverage of the newly formed cell area to be set on the basis of the circumstances of the neighbor cell areas or on the basis of the communication circumstances of mobile stations in the neighbor cell areas, whereby autonomous and optimal cell formation can be achieved on the occasion of adding a new resource to the cellular system. Since the control apparatus can set a cell area of desired size in an arbitrary direction, it is feasible to reduce unavailable areas of service appearing between adjacent cells, as compared with the conventional method by which the cell areas can be set only in particular directions.

## Claims

1. A cell area formation control method adapted to a cellular system comprising a control apparatus for controlling formation of a cell area and a plurality of mobile stations; and utilized when the control apparatus forms a cell area in the cellular system, the method comprising:

   setting a direction and a coverage of a newly formed cell area on the basis of circumstances of neighbor cell areas.

2. A cell area formation control method adapted to a cellular system comprising a control apparatus for controlling formation of a cell area and a plurality of mobile stations; and utilized when the control apparatus forms a cell area in the cellular system, wherein said control apparatus sets a direction and a coverage of a newly formed cell area on the basis of communication circumstances of the mobile stations in neighbor cell areas.

3. A control apparatus for controlling formation of a cell area in a cellular system, the apparatus comprising:

   first cell area setting means for setting a direction and a coverage of a newly formed cell area on the basis of circumstances of neighbor cell areas.

4. The control apparatus according to Claim 3, further comprising neighbor circumstances detecting means for detecting the circumstances of the neighbor cell areas containing information about locations of other control apparatus forming the neighbor cell areas, on the basis of broadcast signals from the other control apparatus provided with information about the circumstances.

5. The control apparatus according to Claim 3, further comprising:

   home circumstances detecting means for detecting circumstances of the cell area of the home apparatus containing location information of the home apparatus; and
   information exchanging means for exchanging the result of the detection and information about the circumstances of the neighbor cell areas containing location information of other control apparatus forming the neighbor cell areas, with the other control apparatus.

6. The control apparatus according to Claim 3, further comprising:

   location detecting means for detecting information about locations of other control apparatus forming the neighbor cell areas, on the basis of broadcast signals from the other control apparatus provided with the location information, and detecting a location of the home apparatus; and

direction setting means for obtaining a mid-direction that bisects a zone between directions from the home apparatus toward respective other control apparatus adjacent to each other, on the basis of the location information of the home apparatus and the location information of the other control apparatus obtained by the detection, and setting a direction and a center angle of a cell area on the basis of a zone between mid-directions adjacent to each other among mid-directions thus obtained.

7. The control apparatus according to Claim 3, further comprising:

location detecting means for detecting information about locations of other control apparatus forming the neighbor cell areas, on the basis of broadcast signals from the other control apparatus provided with the location information, and detecting a location of the home apparatus; and

direction setting means for obtaining a center position direction from the home apparatus toward a center position of each of other control apparatus adjacent to each other, on the basis of the location information of the home apparatus and the location information of the other control apparatus obtained by the detection, and setting a direction and a center angle of a cell area on the basis of a zone between center position directions adjacent to each other among center position directions thus obtained.

8. The control apparatus according to Claim 3, further comprising:

location detecting means for detecting information about locations of other control apparatus forming the neighbor cell areas, on the basis of broadcast signals from the other control apparatus provided with the location information, and detecting a location of the home apparatus; distance detecting means for detecting a distance between the home apparatus and each of the other control apparatus on the basis of the location information of the home apparatus and the location information of the other control apparatus obtained by the detection; and

radius setting means for setting a radius of a cell area on the basis of the distance obtained by the detection and a predetermined constant about an overlap factor between cells.

9. The control apparatus according to Claim 3, further comprising:

location detecting means for detecting information about locations of other control apparatus forming the neighbor cell areas, on the basis of broadcast signals from the other control apparatus provided with the location information, and detecting a location of the home apparatus; power information acquiring means for receiving the broadcast signals transmitted from the other control apparatus and each provided with information about a transmission power used in the transmission, to acquire the transmission power information, and measuring reception powers of the broadcast signals at the home apparatus;

propagation loss calculating means for calculating propagation losses between the home apparatus and the other control apparatus on the basis of the reception powers and the transmission powers; and

cell area arrangement detecting means for detecting arrangement of the cell areas formed by the other control apparatus, on the basis of the propagation losses obtained by the calculation, and the location information of the home apparatus and the location information of the other control apparatus obtained by the detection.

10. A control apparatus for controlling formation of a cell area in a cellular system, the apparatus comprising:

second cell area setting means for setting a direction and a coverage of a newly formed cell area on the basis of communication circumstances of mobile stations in neighbor cell areas.

11. The control apparatus according to Claim 10, further comprising:

receiving means for receiving information about a location of each mobile station and communication circumstances thereof from each mobile station; and

first neighbor circumstances detecting means for detecting arrangement circumstances of the neighbor cell areas on the basis of the location information and communication circumstances of each mobile station.

12. The control apparatus according to Claim 10, further comprising:

receiving means for receiving information about a location of each mobile station and information about the number of simultaneously communicable control apparatus from each mobile station; and

second neighbor circumstances detecting means for detecting arrangement circumstances of the neighbor cell areas on the basis of the location information and the information about the number of simultaneously communicable control apparatus from each mobile station.

**13.** The control apparatus according to Claim 10, further comprising:

receiving means for receiving information about a location of each mobile station and information about the number of simultaneously communicable control apparatus from each mobile station; and

overlap area detecting means for detecting presence or absence of an overlap area between the cell area formed by the control apparatus and a neighbor cell area, and a location of the overlap area, as arrangement circumstances of the neighbor cell areas, on the basis of the location information and the information about the number of simultaneously communicable control apparatus at the location of each mobile station, received from each mobile station.

**14.** A cell area formation control program adapted to a cellular system comprising a control apparatus for controlling formation of a cell area and a plurality of mobile stations; and configured to be executed by a computer mounted on the control apparatus when the control apparatus forms a cell area in the cellular system, said program letting the computer execute:

a neighbor circumstances detecting step of detecting circumstances of neighbor cell areas containing information about locations of other control apparatus forming the neighbor cell areas, on the basis of broadcast signals from the other control apparatus provided with information of the circumstances; and

a cell area setting step of setting a direction and a coverage of a newly formed cell area on the basis of the result of the detection.

**Fig.1**

# Fig.2

Legend:
- → FLOW OF BASE-STATION CONTROL SIGNAL
- ·····→ FLOW OF BROADCAST SIGNAL

1 RECEIVE ANTENNA

2 BROADCAST SIGNAL DETECTOR

3 BROADCAST SIGNAL PROCESSOR

4 CELL AREA SELECTOR

5 CELL SPANNING ANGLE PROCESSOR

6 CELL DIRECTION PROCESSOR

7 CELL RADIUS PROCESSOR

8 CELL AREA CONTROLLER

12 TRANSMIT ANTENNA 1

12 TRANSMIT ANTENNA n

10 BROADCAST SIGNAL GENERATOR

9 BASE STATION LOCATION DETECTOR

11 BROADCAST SIGNAL TRANSMITTER

EP 1 357 766 A1

# Fig.3A

# Fig.3B

# Fig.3C

# Fig.3D

# Fig.3E

# Fig.3F

# Fig.4

| LOCATION INFORMATION |
| --- |
| x , y |

# Fig.5

```
          ┌──────────┐
          │  START   │
          └──────────┘
               │
               ▼
   ┌─────────────────────────┐
   │ DETECTION OF HOME STATION│──── S01
   │   LOCATION INFORMATION   │
   └─────────────────────────┘
               │
               ▼
   ┌─────────────────────────┐
   │    BROADCAST SIGNAL      │──── S02
   │    RECEIVING PROCESS     │
   └─────────────────────────┘
               │
               ▼
   ┌─────────────────────────┐
   │   CELL AREA DETECTING    │──── S03
   │        PROCESS           │
   └─────────────────────────┘
               │
               ▼
   ┌─────────────────────────┐
   │   CELL SPANNING ANGLE    │──── S04
   │     SETTING PROCESS      │
   └─────────────────────────┘
               │
               ▼
   ┌─────────────────────────┐
   │     CELL DIRECTION       │──── S05
   │     SETTING PROCESS      │
   └─────────────────────────┘
               │
               ▼
   ┌─────────────────────────┐
   │       CELL RADIUS        │──── S06
   │     SETTING PROCESS      │
   └─────────────────────────┘
               │
               ▼
   ┌─────────────────────────┐
   │ TRANSMISSION OF PILOT SIGNAL,│──── S07
   │   AND FORMATION OF CELL  │
   └─────────────────────────┘
               │
               ▼
            ◇ IS            ──── S08
         PROCESSING COMPLETED
     N ◇  FOR ALL AREAS?  ◇
               │ Y
               ▼
          ┌──────────┐
          │   END    │
          └──────────┘
```

# Fig.6A

```
        ┌────────────────────────┐
        │   BROADCAST SIGNAL     │
        │   RECEIVING PROCESS    │
        └────────────────────────┘
                    │
    ┌──────────────▼──────────────┐
    │  ┌──────────────────────┐   │
    │  │    RECEPTION OF      │───S11
    │  │  BROADCAST SIGNAL    │   │
    │  └──────────────────────┘   │
    │             │               │
    │        ╱────▼────╲     S12   │
    │  N   ╱  IS RECEPTION ╲──────┘
    └─────╱    OVER?      ╲
          ╲              ╱
           ╲────┬───────╱
                │ Y
    ┌───────────▼────────────┐
    │  RECORDING OF LOCATION │──S13
    │   OF EACH BASE STATION │
    └────────────────────────┘
                │
        ┌───────▼───────┐
        │    RETURN     │
        └───────────────┘
```

# Fig.6B

```
        ┌────────────────────────┐
        │      CELL AREA         │
        │   DETECTING PROCESS    │
        └────────────────────────┘
                    │
    ┌───────────────▼────────────┐
    │  DETECTION OF DIRECTION    │──S21
    │    TO EACH BASE STATION    │
    └────────────────────────────┘
                    │
    ┌───────────────▼────────────┐
    │ SETTING OF CELL AREA TOWARD│──S22
    │     EACH BASE STATION      │
    └────────────────────────────┘
                    │
            ┌───────▼───────┐
            │    RETURN     │
            └───────────────┘
```

## Fig.7A

CELL SPANNING ANGLE
SETTING PROCESS

DETECTION OF DIRECTION TO MIDPOINT
BETWEEN TARGET BASE STATION AND
ADJACENT BASE STATION (MID-DIRECTION) — S31

IS
THERE ONLY ONE ADJACENT
BASE STATION? — S32

N

S33

SETTING OF ANGLE BETWEEN
DIFFERENT MID-DIRECTIONS
AS CELL ANGLE

Y

CALCULATION OF ANGLE BETWEEN
MID-DIRECTION AND DIRECTION
TO TARGET BASE STATION — S34

SETTING OF ANGLE GREATER
THAN CALCULATED ANGLE,
AS CELL SPANNING ANGLE — S35

RETURN

## Fig.7B

CELL DIRECTION
SETTING PROCESS

S41

SETTING OF ZONE WITH SET
SPANNING ANGLE FROM
MID-DIRECTION AS CELL

S42

SETTING OF DIRECTION
BISECTING SPANNING ANGLE,
AS CELL DIRECTION

RETURN

## Fig.7C

CELL RADIUS
SETTING PROCESS

S51

CALCULATION OF DISTANCE
TO TARGET BASE STATION,
BASED ON LOCATION INFORMATION

S52

SETTING OF x TIMES
BASE-TO-BASE DISTANCE AS CELL
RADIUS $(0.5 \leqq x \leqq 1.0)$

RETURN

**Fig.8A**

**Fig.8B**

**Fig.8C**

**Fig.8D**

**Fig.8E**

**Fig.8F**

**Fig.8G**

**Fig.8H**

# Fig.9

| LOCATION INFORMATION | TRANSMISSION POWER |
|:---:|:---:|
| x , y | z |

## Fig.10A

```
BROADCAST SIGNAL
RECEIVING PROCESS
         │
         ▼
  RECEPTION OF        ─── S61
  BROADCAST SIGNAL
         │
         ▼
       ┌───────────┐
   ┌── N   IS         S62
   │   RECEPTION OVER?
   │      └───────────┘
   │         │ Y
   │         ▼
   │  RECORDING OF LOCATION,
   │  TRANSMISSION POWER, AND      ─── S63
   │  RECEPTION POWER OF EACH BASE STATION
   │         │
   │         ▼
   │      RETURN
```

## Fig.10B

```
CELL AREA DETECTION
     PROCESS
         │
         ▼
  DETECTION OF DIRECTION    ─── S71
  TO EACH BASE STATION
         │
         ▼
  SETTING OF ZONE BETWEEN
  TWO BASE STATION DIRECTIONS   ─── S72
     AS CELL AREA
         │
         ▼
      RETURN
```

30

## Fig.11A

CELL SPANNING ANGLE
SETTING PROCESS

↓

CALCULATION OF ANGLE
BETWEEN TWO BASE
STATION DIRECTIONS — S81

↓

SETTING OF CALCULATED
ANGLE AS CELL SPANNING
ANGLE — S82

↓

RETURN

## Fig.11B

CELL DIRECTION
SETTING PROCESS
— S91

↓

DETECTION OF MID-DIRECTION
SELECTED DURING SETTING
OF CELL AREA

↓ — S92

SETTING OF MID-DIRECTION
AS CELL DIRECTION

↓

RETURN

## Fig.11C

CELL RADIUS
SETTING PROCESS

S101 ↓

EXTRACTION OF TRANSMISSION
POWER OF EACH BASE STATION
AND SIGNAL RECEPTION POWER

↓ — S102

CALCULATION OF RADIUS OF
EACH BASE STATION FROM
PROPAGATION LOSS OF SIGNAL

↓ — S103

CALCULATION OF BASE-TO-BASE
DISTANCE FROM LOCATION
INFORMATION OF EACH BASE STATION

↓ — S104

CALCULATION OF DIFFERENCE
BETWEEN BASE-TO-BASE DISTANCE
AND CALCULATED CELL RADIUS

↓ — S105

CALCULATION OF VECTOR IN BASE
STATION DIRECTION AND WITH LENGTH
EQUAL TO CALCULATED DIFFERENCE

↓

IS
PROCESSING
COMPLETED FOR ALL BASE
STATIONS? — S106
— N

↓ Y

SETTING OF LENGTH OF RESULTANT
OF TWO VECTORS AS CELL RADIUS — S107

↓

RETURN

## Fig.12

→ FLOW OF BASE-STATION CONTROL SIGNAL

····► FLOW OF BROADCAST SIGNAL

RECEIVE ANTENNA `1`

MOBILE STATION NOTIFICATION SIGNAL DETECTOR `2A`

MOBILE STATION INFORMATION PROCESSOR `3A`

CELL AREA SELECTOR `4`

CELL SPANNING ANGLE PROCESSOR `5`

CELL DIRECTION PROCESSOR `6`

CELL RADIUS PROCESSOR `7`

CELL AREA CONTROLLER `8`

TRANSMIT ANTENNA 1 `12`

TRANSMIT ANTENNA n `12`

BASE STATION LOCATION DETECTOR `9`

BROADCAST SIGNAL GENERATOR `10`

BROADCAST SIGNAL TRANSMITTER `11`

BASE STATION NUMBER PROVIDER `13`

EP 1 357 766 A1

Fig.13

FLOW OF MOBILE-STATION CONTROL SIGNAL

FLOW OF MOBILE-STATION NOTIFICATION SIGNAL

RECEIVE ANTENNA 21 → BROADCAST SIGNAL DETECTOR 22 → BASE STATION NUMBER STORAGE 23 → NOTIFICATION SIGNAL GENERATOR 25 → NOTIFICATION SIGNAL TRANSMITTER 26 → TRANSMIT ANNTENA 27

MOBILE STATION LOCATION DETECTOR 24

EP 1 357 766 A1

33

Fig.14A

Fig.14B

Fig.14C

Fig.14D

Fig.14E

Fig.14F

Fig.14G

Fig.14H

# Fig.15

| BASE STATION NUMBER |
|:---:|
| S |

# Fig.16

| LOCATION INFORMATION | NUMBER OF BASE STATIONS |
|:---:|:---:|
| x , y | n |

# *Fig.17*

```
                    ┌──────────┐
                    │  START   │
                    └──────────┘
                         │
                         ▼
            ┌─────────────────────────────┐
            │  DETECTION OF HOME STATION  │~S111
            │     LOCATION INFORMATION    │
            └─────────────────────────────┘
                         │
                         ▼
            ┌─────────────────────────────┐
            │  TRANSMISSION OF BROADCAST  │~S112
            │       SIGNAL INTO CELL      │
            └─────────────────────────────┘
                         │
                         ▼
            ┌─────────────────────────────┐
            │     MOBILE STATION SIGNAL   │~S113
            │      RECEIVING PROCESS      │
            └─────────────────────────────┘
                         │
                         ▼
            ┌─────────────────────────────┐
            │  CELL AREA SETTING PROCESS  │~S114
            └─────────────────────────────┘
                         │
          ┌──────────────▼──────────────┐
          │ ┌─────────────────────────────┐
          │ │      CELL SPANNING ANGLE    │~S115
          │ │       SETTING PROCESS       │
          │ └─────────────────────────────┘
          │              │
          │              ▼
          │ ┌─────────────────────────────┐
          │ │        CELL DIRECTION       │~S116
          │ │       SETTING PROCESS       │
          │ └─────────────────────────────┘
          │              │
          │              ▼
          │ ┌─────────────────────────────┐
          │ │         CELL RADIUS         │~S117
          │ │       SETTING PROCESS       │
          │ └─────────────────────────────┘
          │              │
          │              ▼
          │ ┌─────────────────────────────┐
          │ │ TRANSMISSION OF PILOT SIGNAL,│~S118
          │ │    AND FORMATION OF CELL    │
          │ └─────────────────────────────┘
          │              │
          │              ▼           S119
          │          ╱─────────╲
          │         ╱     IS     ╲
          └────────< PROCESSING  >
              N     ╲ COMPLETED  ╱
                     ╲FOR ALL CELLS?╱
                      ╲─────────╱
                         │Y
                         ▼
                    ┌──────────┐
                    │   END    │
                    └──────────┘
```

36

## Fig.18A

```
┌─────────────────────────┐
│  MOBILE STATION SIGNAL  │
│   RECEIVING PROCESS     │
└─────────────────────────┘
             │
             ▼                    ～S121
┌─────────────────────────┐
│   RECEPTION OF MOBILE   │
│     STATION SIGNAL      │
└─────────────────────────┘
             │
             ▼                    ～S122
┌─────────────────────────┐
│   RECORDING OF BASE     │
│     STATION NUMBER      │
│    FOR EACH LOCATION    │
└─────────────────────────┘
             │
             ▼                S123
        ╱─────────╲
       ╱    HAS     ╲
   N  ╱ FIXED PERIOD ╲
  ◄──╱   ELAPSED?     ╲
      ╲               ╱
       ╲─────────────╱
             │ Y
             ▼
      ┌─────────────┐
      │   RETURN    │
      └─────────────┘
```

## Fig.18B

```
┌─────────────────────────┐
│   CELL AREA SETTING     │
│      PROCESS            │
└─────────────────────────┘
             │
             ▼                    ～S131
┌─────────────────────────┐
│ EXTRACTION OF INFORMATION│
│   ABOUT LOCATION AND    │
│  NUMBER OF BASE STATIONS │
└─────────────────────────┘
             │
             ▼                    ～S132
┌─────────────────────────┐
│ EXTRACTION OF FARTHERMOST│
│  LOCATION IN EACH DIRECTION│
└─────────────────────────┘
             │
             ▼                    ～S133
┌──────────────────────────────┐
│ DETECTION OF BOUNDARY LOCATION│
│   BETWEEN LOCATION WHERE THE  │
│  NUMBER OF COMMUNICABLE BASE  │
│ STATIONS IS ONE AND LOCATION  │
│  WHERE THE NUMBER IS TWO OR   │
│           MORE                │
└──────────────────────────────┘
             │
             ▼                    ～S134
┌──────────────────────────────┐
│ SETTING OF ZONE BETWEEN BOUNDARY│
│  DIRECTIONS ALONG TWO ADJACENT │
│ BOUNDARY LOCATIONS AS ONE CELL AREA│
└──────────────────────────────┘
             │
             ▼                    ～S135
┌──────────────────────────────┐
│ SETTING OF ZONE BETWEEN BOUNDARY│
│   DIRECTIONS AS ONE AREA       │
└──────────────────────────────┘
             │
             ▼
      ┌─────────────┐
      │   RETURN    │
      └─────────────┘
```

## Fig.19A

```
┌──────────────────────────┐
│   CELL SPANNING ANGLE    │
│     SETTING PROCESS      │
└──────────────────────────┘
             │
             ▼
┌──────────────────────────┐
│    DETECTION OF ZONE     │
│   BETWEEN BOUNDARY       │──── S141
│      DIRECTIONS          │
└──────────────────────────┘
             │
             ▼
┌──────────────────────────┐
│   SETTING OF ANGLE OF    │
│  DETECTED RANGE AS CELL  │──── S142
│     SPANNING ANGLE       │
└──────────────────────────┘
             │
             ▼
       ┌──────────┐
       │  RETURN  │
       └──────────┘
```

## Fig.19B

```
┌──────────────────────────┐
│    CELL DIRECTION        │
│    SETTING PROCESS       │
└──────────────────────────┘       S151
             │
             ▼
┌──────────────────────────┐
│  SETTING OF DIRECTION    │
│ BISECTING CELL SPANNING  │
│ ANGLE, AS CELL DIRECTION │
└──────────────────────────┘
             │
             ▼
       ┌──────────┐
       │  RETURN  │
       └──────────┘
```

## Fig.19C

```
┌──────────────────────────┐
│   CELL RADIUS SETTING    │
│       PROCESS            │
└──────────────────────────┘    S161
             │
             ▼
┌──────────────────────────┐
│  CHECKING OF NUMBER OF   │
│ COMMUNICABLE BASE STATIONS,│
│   IN SET CELL DIRECTION  │
└──────────────────────────┘
             │
             ▼
         ◇ S162
    IS NUMBER
  OF COMMUNICABLE BASE ──── Y ──────────────┐
    STATIONS ONE?                            │
         │                                   │
         N                                   │
         │ S163                              │ S164
         ▼                                   ▼
┌──────────────────────┐        ┌──────────────────────────┐
│ SETTING OF FARTHERMOST│        │  INCREASE OF TRANSMISSION │
│ LOCATION IN SET ZONE AS│       │  POWER BY FIXED AMOUNT    │
│    CELL RADIUS        │        └──────────────────────────┘
└──────────────────────┘                     │
         │◄────────────────────────────────┘
         ▼
   ┌──────────┐
   │  RETURN  │
   └──────────┘
```

# Fig.20

```
                    ┌─────────────┐
                    │    START    │
                    └──────┬──────┘
                           │
                           ▼
            ┌──────────────────────────────┐
            │   DETECTION OF BASE STATION   │ ~S201
            │       BROADCAST SIGNAL        │
            └───────────────┬──────────────┘
                            │
                            ▼
            ┌──────────────────────────────┐
            │    COUNTING OF NUMBER OF      │ ~S202
            │  COMMUNICABLE BASE STATIONS   │
            └───────────────┬──────────────┘
                            │
                            ▼
            ┌──────────────────────────────┐
            │      DETECTION OF OWN         │ ~S203
            │    LOCATION INFORMATION       │
            └───────────────┬──────────────┘
                            │
                            ▼
            ┌──────────────────────────────┐
            │    ADDITION OF LOCATION       │ ~S204
            │     INFORMATION AND BASE      │
            │   STATION NUMBER TO MOBILE    │
            │        STATION SIGNAL         │
            └───────────────┬──────────────┘
                            │
                            ▼
            ┌──────────────────────────────┐
            │   TRANSMISSION OF MOBILE      │ ~S205
            │       STATION SIGNAL          │
            └───────────────┬──────────────┘
                            │
                            ▼
                    ┌─────────────┐
                    │     END     │
                    └─────────────┘
```

# Fig.21

BS1    BS2

BS3

BS4

AREA THAT CANNOT
BE COVERED

**European Patent Office**

## EUROPEAN SEARCH REPORT

Application Number

EP 03 00 9047

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 168 869 A (NTT DOCOMO INC) 2 January 2002 (2002-01-02) * paragraph [0036] - paragraph [0039] * * paragraph [0048] * * paragraph [0051] * * paragraph [0081] * * figures 3,5,6 * | 1-10,14 | H04Q7/36 H04Q7/30 |
| X | EP 1 193 987 A (NTT DOCOMO INC) 3 April 2002 (2002-04-03) * paragraph [0047] * * paragraph [0069] * * paragraph [0078] * * figures 2,18 * | 1-3, 10-13 | |
| A | WO 98 16077 A (BROADSTONE STEVEN R ;VELAZQUEZ SCOTT R (US); TERATECH CORP (US); C) 16 April 1998 (1998-04-16) * figure 8 * | 1-14 | |
| A | O'BYRNE V: "Increase in performance of a new or deployed system by cell site re-configuration" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 1530-1534, XP010353318 ISBN: 0-7803-5435-4 | | TECHNICAL FIELDS SEARCHED (Int.Cl.7) H04Q |

The present search report has been drawn up for all claims

| Place of search | Date of completion of the search | Examiner |
|---|---|---|
| THE HAGUE | 8 August 2003 | Schut, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 00 9047

This annex lists the patent family members relating to the patent documents cited in the above-mentioned European search report.
The members are as contained in the European Patent Office EDP file on
The European Patent Office is in no way liable for these particulars which are merely given for the purpose of information.

08-08-2003

| Patent document cited in search report | | Publication date | Patent family member(s) | | Publication date |
|---|---|---|---|---|---|
| EP 1168869 | A | 02-01-2002 | EP | 1168869 A1 | 02-01-2002 |
| | | | CN | 1363194 T | 07-08-2002 |
| | | | WO | 0158193 A1 | 09-08-2001 |
| | | | US | 2003036409 A1 | 20-02-2003 |
| EP 1193987 | A | 03-04-2002 | JP | 2002112316 A | 12-04-2002 |
| | | | JP | 2002125258 A | 26-04-2002 |
| | | | CN | 1347257 A | 01-05-2002 |
| | | | EP | 1193987 A2 | 03-04-2002 |
| | | | US | 2002077142 A1 | 20-06-2002 |
| WO 9816077 | A | 16-04-1998 | US | 6512481 B1 | 28-01-2003 |
| | | | AU | 4907497 A | 05-05-1998 |
| | | | CN | 1233376 A | 27-10-1999 |
| | | | EP | 0931425 A2 | 28-07-1999 |
| | | | KR | 2000049007 A | 25-07-2000 |
| | | | TW | 379488 B | 11-01-2000 |
| | | | WO | 9816077 A2 | 16-04-1998 |
| | | | US | 2001003443 A1 | 14-06-2001 |

EPO FORM P0459

For more details about this annex : see Official Journal of the European Patent Office, No. 12/82